(19) **Europäisches Patentamt / European Patent Office / Office européen des brevets**

(11) **EP 1 213 595 B1**

(12) **FASCICULE DE BREVET EUROPEEN**

(45) Date de publication et mention de la délivrance du brevet:
**23.03.2016 Bulletin 2016/12**

(51) Int Cl.:
**G02B 6/02** *(2006.01)*     **G02B 6/293** *(2006.01)*
**H04B 10/2525** *(2013.01)*     **G02B 6/036** *(2006.01)*
**G02B 6/028** *(2006.01)*

(21) Numéro de dépôt: **01402630.6**

(22) Date de dépôt: **11.10.2001**

(54) **Compensation de la dispersion chromatique dans un système de transmission à fibre optique, et fibre de compensation**

Kompensation der chromatischen Dispersion in einem Glasfaserübertragungssystem und Kompensationsglasfaser

Chromatic dispersion compensation in a fiber transmission system and compensation fiber

(84) Etats contractants désignés:
**AT BE CH CY DE DK ES FI FR GB GR IE IT LI LU MC NL PT SE TR**

(30) Priorité: **11.05.2001 FR 0106246**
           **16.10.2000 FR 0013209**

(43) Date de publication de la demande:
**12.06.2002 Bulletin 2002/24**

(73) Titulaire: **Draka Comteq B.V.**
**1083 HJ Amsterdam (NL)**

(72) Inventeurs:
• **Sillard, Pierre**
**78150 Les Chesnay (FR)**
• **Gorlier, Maxime**
**75017 Paris (FR)**
• **de Montmorillon, Louis-Anne**
**75017 Paris (FR)**
• **Fleury, Ludovic**
**78390 Bois d'Arcy (FR)**

• **Beaumont, Florent**
**78700 Conflans Ste Honorine (FR)**
• **Nouchi, Pascale**
**78600 Maisons Laffitte (FR)**

(74) Mandataire: **Algemeen Octrooi- en Merkenbureau B.V.**
**P.O. Box 645**
**5600 AP Eindhoven (NL)**

(56) Documents cités:
**EP-A- 0 668 520**     **EP-A- 0 989 420**
**EP-A- 1 030 199**     **EP-A- 1 081 514**
**WO-A-99/42869**     **US-A- 5 568 583**

• **ANTOS A J ET AL: "DESIGN AND CHARACTERIZATION OF DISPERSION COMPENSATING FIBER BASED ON THE LP01 MODE" JOURNAL OF LIGHTWAVE TECHNOLOGY, IEEE. NEW YORK, US, vol. 12, no. 10, 1 octobre 1994 (1994-10-01), pages 1739-1744, XP000469527 ISSN: 0733-8724**

**Description**

La présente invention concerne le domaine des transmissions par fibre optique, et plus spécifiquement, la compensation de la dispersion chromatique et de la pente de dispersion chromatique dans des systèmes de transmission par fibre optique.

Pour des fibres optiques, on qualifie généralement le profil d'indice en fonction de l'allure du graphe de la fonction qui associe au rayon de la fibre l'indice de réfraction. On représente de façon classique sur les abscisses la distance r au centre de la fibre, et sur les ordonnées la différence entre l'indice de réfraction et l'indice de réfraction de la gaine de la fibre. On parle ainsi de profil d'indice en "échelon", en "trapèze" ou en "triangle" pour des graphes qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent.

Dans les nouveaux réseaux de transmission à hauts débits et multiplexés en longueur d'onde, il est avantageux de gérer la dispersion chromatique, notamment pour des débits supérieurs ou égaux à 40Gbit/s ou à 160Gbit/s; l'objectif est d'obtenir, pour toutes les valeurs de longueur d'onde du multiplex, une dispersion chromatique cumulée sensiblement nulle sur la liaison, de sorte à limiter l'élargissement des impulsions. Une valeur cumulée de quelques dizaines de ps/nm pour la dispersion est en général acceptable. Il est aussi intéressant d'éviter au voisinage des longueurs d'onde utilisées dans le système les valeurs nulles de la dispersion chromatique locale, pour lesquelles les effets non-linéaires sont plus importants. Enfin, il est aussi intéressant de limiter la pente de dispersion chromatique cumulée sur la plage du multiplex de sorte à éviter ou limiter les distorsions entre les canaux du multiplex. Cette pente est classiquement la dérivée de la dispersion chromatique par rapport à la longueur d'onde.

On utilise classiquement comme fibre de ligne pour les systèmes de transmission à fibres optiques des fibres à saut d'indice, appelées aussi fibres SMF (acronyme de l'anglais "Single Mode Fiber"). La demanderesse commercialise ainsi sous référence ASMF 200 une fibre monomode à saut d'indice présentant une longueur d'onde $\lambda_0$ d'annulation de la dispersion chromatique entre 1300 et 1320 nm, et une dispersion chromatique inférieure ou égale à 3,5 ps/(nm.km) dans une plage de 1285-1330 nm, et de l'ordre de 17 ps/(nm.km) à 1550 nm. La pente de dispersion chromatique à 1550 nm est de l'ordre de 0,06 ps/(nm$^2$.km).

Sont aussi apparues sur le marché des fibres à dispersion décalée, ou DSF (acronyme de l'anglais "Dispersion shifted fibers"). Ces fibres sont telles qu'à la longueur d'onde de transmission à laquelle elles sont utilisées, qui est en général différente de la longueur d'onde de 1,3 $\mu$m pour laquelle la dispersion de la silice est sensiblement nulle, la dispersion chromatique est sensiblement nulle; c'est à dire que la dispersion chromatique de la silice, non nulle, est compensée - d'où l'emploi du terme décalé - par une augmentation de l'écart d'indice $\Delta$n entre le coeur de la fibre et la gaine optique. Cet écart d'indice permet de décaler la longueur d'onde pour laquelle la dispersion chromatique est nulle; il est obtenu par l'introduction de dopants dans la préforme, lors de la fabrication de celle-ci, par exemple par un processus de MCVD connu en soi, et qui n'est pas décrit plus en détail ici.

On qualifie de NZ-DSF+ (acronyme de l'anglais "non-zero dispersion shifted fibers") des fibres à dispersion décalée, présentant une dispersion chromatique non-nulle et positive pour les longueurs d'onde auxquelles elles sont utilisées, typiquement autour de 1550 nm. Ces fibres présentent pour ces longueurs d'onde une dispersion chromatique faible, typiquement inférieure à 11 ps/(nm.km) à 1550 nm, et une pente de dispersion chromatique entre 0,04 et 0,1 ps/(nm$^2$.km).

FR-A2 790 107 propose une fibre de ligne, tout particulièrement adaptée à une transmission à multiplexage en longueurs d'onde dense, avec un espacement entre les canaux de 100 GHz ou moins pour un débit par canal de 10 Gbit/s; cette fibre présente pour une longueur d'onde de 1550 nm une surface effective supérieure ou égale à 60 $\mu$m$^2$, une dispersion chromatique comprise entre 6 et 10 ps/(nm.km), et une pente de dispersion chromatique inférieure à 0,07 ps/(nm$^2$.km).

La demande de brevet français n° 0002316 déposée le 24/02/2000 et intitulée "Fibre optique monomode en câble pour réseaux de transmission à fibre optique à multiplexage en longueurs d'onde" propose une fibre de ligne présentant à 1550 nm une dispersion chromatique entre 5 et 11 ps/(nm.km), un rapport entre la dispersion chromatique et la pente de dispersion chromatique entre 250 et 370 nm et un rapport entre le carré de la surface effective et la pente de dispersion chromatique supérieur à 8.10$^4$ $\mu$m$^2$.nm$^2$.km/ps. Cette fibre de ligne a une plage d'utilisation de 1300 à 1625 nm. Dans un exemple de cette demande, elle est compensée en dispersion par une fibre de compensation de dispersion présentant une dispersion chromatique de -100 ps/(nm.km) et un rapport entre la dispersion chromatique et la pente de dispersion chromatique de 260 nm.

Pour compenser la dispersion chromatique et la pente de dispersion chromatique dans des fibres SMF ou NZ-DSF+ utilisées comme fibres de ligne, il est connu d'utiliser des faibles longueurs de fibre de compensation de dispersion ou DCF (Dispersion Compensating Fiber en langue anglaise). Un exemple d'un tel système de transmission, dans lequel la dispersion chromatique dans une fibre de ligne SMF est compensée par de la fibre DCF est décrit dans M. Nishimura et autres, Dispersion compensating fibers and their applications, OFC'96 Technical Digest ThA1. Un tel usage d'une fibre de compensation de dispersion est aussi mentionné dans L. Grüner-Nielsen et autres, Large volume Manufacturing of dispersion compensating fibers, OFC'98 Technical Digest TuD5. Il est proposé, dans ces articles comme dans d'autres documents de l'état de la technique, de choisir la fibre de compensation de dispersion en fonction de la fibre de ligne, de telle sorte que les rapports de la dispersion chromatique à la pente de dispersion chromatique soient sensiblement égaux pour la fibre de compensation et pour la fibre de ligne.

Des fibres DCF sont aussi décrites dans différents brevets. Elles présentent au voisinage d'une longueur d'onde de 1550 nm une dispersion chromatique négative, pour compenser la dispersion chromatique cumulée dans la fibre de ligne, et peuvent en outre présenter une pente de la dispersion chromatique négative pour compenser la pente positive de la dispersion chromatique de la fibre de ligne. US-A-5 568 583 ou US-A-5 361 319 proposent une fibre DCF pour la compensation de la dispersion chromatique d'une fibre SMF, d'une dispersion de l'ordre de 17 ps/(nm.km) à 1550 nm.

WO-A-99 13366 propose une fibre de compensation de dispersion, qui est destinée à être utilisée dans des boîtiers de compensation, pour compenser la dispersion chromatique et la pente de dispersion chromatique d'une fibre du type commercialisé par la société Lucent sous la marque "True Wave"; cette fibre présente une dispersion chromatique entre 1,5 et 4 ps/(nm.km) et une pente de dispersion chromatique de 0,07 ps/(nm$^2$.km). La fibre de compensation de dispersion proposée présente dans un exemple de réalisation une dispersion chromatique de -27 ps/(nm.km) et une pente de dispersion chromatique de -1,25 ps/(nm$^2$.km).

Ces fibres de compensation de dispersion conviennent pour des systèmes de transmission fonctionnant en bande C, c'est-à-dire entre 1530 et 1565 nm, ou autour de 1550 nm. Elles ne sont pas ou peu adaptées à compenser la dispersion chromatique et la pente de dispersion chromatique dans des systèmes de transmission fonctionnant à la fois dans les bandes C et L. Dans ce contexte, on appelle bande L la plage de longueurs d'onde qui s'étend au dessus de la bande C, jusqu'à des longueurs d'onde de l'ordre de 1610 ou 1620 nm. Un système de transmission dans les bandes C et L utilise donc typiquement des longueurs d'onde entre 1530 et 1610 nm.

La demande de brevet français déposée le 26 octobre 2000 par la demanderesse, sous le titre "Fibre optique pour la compensation en ligne de la dispersion chromatique d'une Fibre optique à dispersion chromatique positive" décrit une fibre optique qui est utilisée pour compenser la dispersion chromatique et la pente de dispersion chromatique dans des systèmes de transmission en bande C, S et/ou L. mais pour des dispersions chromatiques comprises entre -12 ps/nm-km et -4 ps/nm-km.

L'invention propose une nouvelle fibre qui peut notamment être utilisée pour la compensation de la dispersion chromatique, dans un système de transmission en bandes C et L. Elle convient tant pour des fibres de lignes SMF que pour des fibres de ligne NZ-DSF. Elle propose encore un nouveau critère d'optimisation des fibres de compensation de dispersion par rapport aux fibres de ligne, pour assurer une bonne compensation de la dispersion et de la pente de dispersion, à la fois dans les bandes C et L.

Plus précisément, l'invention propose un système de transmission à fibre optique, présentant une section de fibre de ligne et une section de fibre de compensation compensant la dispersion chromatique dans la section de fibre de ligne, dans lequel la dispersion chromatique C de la fibre de compensation de dispersion, la dérivée C' de la dispersion chromatique par rapport à la longueur d'onde de cette fibre vérifient, pour une longueur d'onde de la plage de longueur d'onde utilisée dans le système de transmission:

$$\frac{C_g}{C'_g} \times \frac{1}{1 + C_{cum}/\left(L_g . C'_g . \Delta\lambda\right)} \le \frac{C}{C'} \le \frac{C_g}{C'_g} \times \frac{1}{1 - C_{cum}/\left(L_g . C'_g . \Delta\lambda\right)} \qquad (1)$$

avec $C_g$ la dispersion chromatique de la fibre de ligne, $C'_g$ la dérivée par rapport à la longueur d'onde de la dispersion chromatique de la fibre de ligne, $C_{cum}$ la borne supérieure du module de la dispersion chromatique cumulée admise dans la section de fibre de ligne et $\Delta\lambda$ la demi-largeur de la plage de longueurs d'onde utilisée dans le système de transmission, et

dans lequel la pente de la dispersion chromatique C' et la dérivée première de cette pente C* par rapport à la longueur d'onde de la fibre de compensation de dispersion vérifient, pour une longueur d'onde sensiblement médiane de la plage de longueur d'onde utilisée dans le système de transmission:

$$\left|\frac{C'}{C''}\right| \ge Max\left(\frac{\Delta\lambda}{2} \times \left(\frac{C.C'_g}{C'.C_g} \times \left(1 \pm \frac{C_{cum}}{L_g . C'_g . \Delta\lambda}\right) - 1\right)^{-1}\right) \qquad (2).$$

Il est avantageux que les contraintes (1) et (2) soient vérifiées pour une longueur d'onde sensiblement médiane de la plage de longueur d'onde utilisée dans le système de transmission; dans ce cas, il est préférable que la différence entre la longueur d'onde sensiblement médiane et la longueur d'onde médiane de la plage de longueurs d'onde utilisée dans le système de transmission soit en module inférieure à 10 % de la plage de longueurs d'onde.

La fibre de compensation de dispersion peut présenter une ou plusieurs des caractéristiques de propagation suivantes:

- une dispersion chromatique inférieure à -40 ps/(nm.km), voire inférieure à -45 ps/(nm.km) à 1550nm;
- des pertes par courbure inférieures ou égales à 400 dB/m pour un enroulement autour d'un manchon de 10 mm de rayon, dans toute la plage de longueurs d'onde utilisée dans le système de transmission;
- une section efficace supérieure ou égale à 12 $\mu$m$^2$ à 1550nm;
- une dispersion modale de polarisation inférieure ou égale à 0,5 ps/km$^{1/2}$ à 1550nm ;
- une atténuation inférieure à 1 dB/km, voire à 0,8 dB/km à 1550nm.

Il est encore avantageux que le rapport entre la borne supérieure du module de la dispersion chromatique cumulée $C_{cum}$ et la longueur $L_g$ d'une section de fibre de ligne soit inférieur à 0,5 ps/(nm.km), voire à 0,1 ps/(nm.km).

La fibre de ligne peut être une fibre à saut d'indice, ou encore une fibre à dispersion décalée à dispersion chromatique positive.

La fibre de compensation de dispersion présente de préférence un profil d'indice en trapèze ou en rectangle avec une tranchée déprimée et un anneau. Ce profil peut être caractérisé comme indiqué plus bas.

L'invention propose aussi une fibre optique présentant une dispersion chromatique C inférieure à -40 ps/(nm.km), voire inférieure à -45 ps/(nm.km) à 1550nm, une pente C' de la dispersion chromatique et une dérivée première C" de la pente de la dispersion chromatique par rapport à la longueur d'onde vérifiant:

$$a \times \frac{1}{1+b} \le \frac{C}{C'} \le a \times \frac{1}{1-b}$$

et

$$\left| \frac{C'}{C''} \right| \ge Max\left( c \times \left( \frac{C}{C'} \frac{1}{a} \times (1 \pm b) - 1 \right)^{-1} \right)$$

pour une longueur d'onde voisine de 1570 nm, avec a, b et c des paramètres vérifiant :

280 $\le$ a $\le$ 360 nm
0.2 $\le$ b $\le$ 0.25 et
c $\le$ 25nm.

Cette fibre peut présenter les caractéristiques de propagation indiquées plus haut pour la fibre de compensation de dispersion. Elle peut présenter un profil d'indice en rectangle avec tranchée enterrée et anneau, ou encore en trapèze avec tranchée enterrée et anneau.

Les caractéristiques du profil peuvent alors être une ou plusieurs des caractéristiques suivantes :

- la différence ($\Delta n_1$) entre l'indice du rectangle ou du trapèze et l'indice de la gaine est comprise entre 18.10$^{-3}$ et 30.10$^{-3}$, et le rayon ($r_1$) de la partie de la fibre présentant un indice supérieur à celui de la gaine est compris entre 1,2 et 2,1 $\mu$m;
- la différence ($\Delta n_2$) entre l'indice de la tranchée déprimée et l'indice de la gaine est comprise entre -8,5.10$^{-3}$ et -4,5.10$^{-3}$, et le rayon extérieur ($r_2$) de cette tranchée est compris entre 3,4 et 6,1 $\mu$m;
- la différence ($\Delta n_3$) entre l'indice de l'anneau et l'indice de la gaine est comprise entre 1.10$^{-3}$ et 15.10$^{-3}$ et le rayon extérieur ($r_3$) de cet anneau est compris entre 5,9 et 8 $\mu$m;
- le double de l'intégrale du produit du rayon par l'indice entre un rayon nul et le rayon ($r_1$) extérieur de la partie centrale de la fibre présentant un indice supérieur à celui de la gaine est compris entre 48.10$^{-3}$ et 65.10$^{-3}$ $\mu$m$^2$;
- le triple de l'intégrale du produit du carré du rayon par l'indice entre un rayon nul et le rayon ($r_1$) extérieur de la partie centrale de la fibre présentant un indice supérieur à celui de la gaine est inférieur à 110.10$^{-3}$ $\mu$m$^3$;
- le double de l'intégrale du produit du rayon par l'indice entre le rayon ($r_1$) extérieur de la partie centrale de la fibre présentant un indice supérieur à celui de la gaine et le rayon intérieur ($r_2$) de l'anneau est compris entre -155.10$^{-3}$ et -75.10$^{-3}$ $\mu$m$^2$;

- le double de l'intégrale du produit du rayon par l'indice entre le rayon intérieur ($r_2$) et le rayon extérieur ($r_3$) de l'anneau est compris entre $70.10^{-3}$ et $210.10^{-3}$ $\mu m^2$;
- le double de l'intégrale du produit du rayon par l'indice entre un rayon nul et le rayon extérieur ($r_3$) de l'anneau est supérieur à $20.10^{-3}$ $\mu m^2$.

Elle propose encore une fibre optique présentant une dispersion chromatique C inférieure à -40 ps/(nm.km), voire inférieure à -45 ps/(nm.km) à 1550nm, une pente C' de la dispersion chromatique et une dérivée première C" de la pente de la dispersion chromatique par rapport à la longueur d'onde vérifiant:

$$a \times \frac{1}{1+b} \le \frac{C}{C'} \le a \times \frac{1}{1-b}$$

et

$$\left| \frac{C'}{C''} \right| \ge Max\left( c \times \left( \frac{C}{C'} \frac{1}{a} \times (1 \pm b) - 1 \right)^{-1} \right)$$

pour une longueur d'onde voisine de 1570 nm, avec a, b et c des paramètres vérifiant :

$$120 \le a \le 200 \text{ nm}$$

$$0.2 \le b \le 0.25$$

et

$$c \le 25 \text{ nm}.$$

Cette fibre peut présenter les caractéristiques de propagation indiquées plus haut pour la fibre de compensation de dispersion. Elle peut présenter un profil d'indice en rectangle avec tranchée enterrée et anneau, ou encore en trapèze avec tranchée enterrée et anneau.

Les caractéristiques du profil peuvent alors être une ou plusieurs des caractéristiques suivantes :

- la différence ($\Delta n_1$) entre l'indice du rectangle ou du trapèze et l'indice de la gaine est comprise entre $18.10^{-3}$ et $30.10^{-3}$, et le rayon ($r_1$) de la partie de la fibre présentant un indice supérieur à celui de la gaine est compris entre 1,2 et 1,9 $\mu m$;
- la différence ($\Delta n_2$) entre l'indice de la tranchée déprimée et l'indice de la gaine est comprise entre $-10.10^{-3}$ et $-5,8.10^{-3}$, et le rayon extérieur ($r_2$) de cette tranchée est compris entre 3,4 et 6,1 $\mu m$;
- la différence ($\Delta n_3$) entre l'indice de l'anneau et l'indice de la gaine est comprise entre $1.10^{-3}$ et $17,5.10^{-3}$ et le rayon extérieur ($r_3$) de cet anneau est compris entre 6.25 et 8,3 $\mu m$;
- le double de l'intégrale du produit du rayon par l'indice entre un rayon nul et le rayon ($r_1$) extérieur de la partie centrale de la fibre présentant un indice supérieur à celui de la gaine est compris entre $50.10^{-3}$ et $60.10^{-3}$ $\mu m^2$;
- le triple de l'intégrale du produit du carré du rayon par l'indice entre un rayon nul et le rayon ($r_1$) extérieur de la partie centrale de la fibre présentant un indice supérieur à celui de la gaine est inférieur à $110.10^{-3}$ $\mu m^3$;
- le double de l'intégrale du produit du rayon par l'indice entre le rayon ($r_1$) extérieur de la partie centrale de la fibre présentant un indice supérieur à celui de la gaine et le rayon intérieur ($r_2$) de l'anneau est compris entre $-230.10^{-3}$ et $-145.10^{-3}$ $\mu m^2$;
- le double de l'intégrale du produit du rayon par l'indice entre le rayon intérieur ($r_2$) et le rayon extérieur ($r_3$) de l'anneau est compris entre $180.10^{-3}$ et $260.10^{-3}$ $\mu m^2$;
- le double de l'intégrale du produit du rayon par l'indice entre un rayon nul et le rayon extérieur ($r_3$) de l'anneau est compris entre $20.10^{-3}$ $\mu m^2$ et $145.10^{-3}$ $\mu m^2$.

D'autres caractéristiques et avantages de l'invention apparaîtront à la lecture de la description qui suit de modes de réalisation de l'invention, donnés à titre d'exemple et en référence aux dessins annexés, qui montrent

- figure 1, une représentation schématique d'un système de transmission selon l'invention;

- figure 2, une représentation schématique du profil d'indice de consigne d'une fibre selon un premier mode de réalisation de l'invention.

- figure 3, une représentation schématique du profil d'indice de consigne d'une fibre d'un deuxième mode de réalisation de l'invention

L'invention repose sur la constatation que le critère utilisé dans l'état de la technique pour le choix de fibres de compensation de dispersion n'est pas nécessairement adapté aux systèmes de transmission fonctionnant dans des plages de longueurs d'onde s'étendant au-delà de la bande C. En particulier, le critère d'égalité des rapports entre la dispersion chromatique et la pente de dispersion chromatique, pour la fibre de ligne et la fibre de compensation de dispersion, n'est pas optimal pour des systèmes de transmission fonctionnant à la fois en bande C et en bande L.

Une explication possible de ce phénomène réside dans la dépendance entre la dispersion chromatique et la longueur d'onde; il s'avère que la dispersion chromatique est une fonction sensiblement linéaire de la longueur d'onde pour une fibre de ligne, et ceci même en dehors de la bande C. En revanche, la dispersion chromatique n'est pas nécessairement une fonction linéaire de la longueur d'onde pour les fibres de compensation de dispersion, en dehors de la bande C.

Il est donc proposé dans un mode de réalisation de l'invention de nouveaux critères, qui permettent efficacement de qualifier la compensation de dispersion dans un système de transmission; ces critères peuvent être utilisés, indépendamment ou en combinaison, pour vérifier l'efficacité de la compensation de dispersion dans un système de transmission; ils peuvent aussi être utilisés, comme expliqué plus bas, pour sélectionner des fibres destinées à être utilisées comme fibres de compensation de dispersion dans des systèmes de transmission. Les critères prennent en compte non seulement la dispersion chromatique et la pente de dispersion chromatique de la fibre de ligne, mais aussi la dérivée première de la pente de la dispersion chromatique ainsi que la longueur des sections de fibre de ligne.

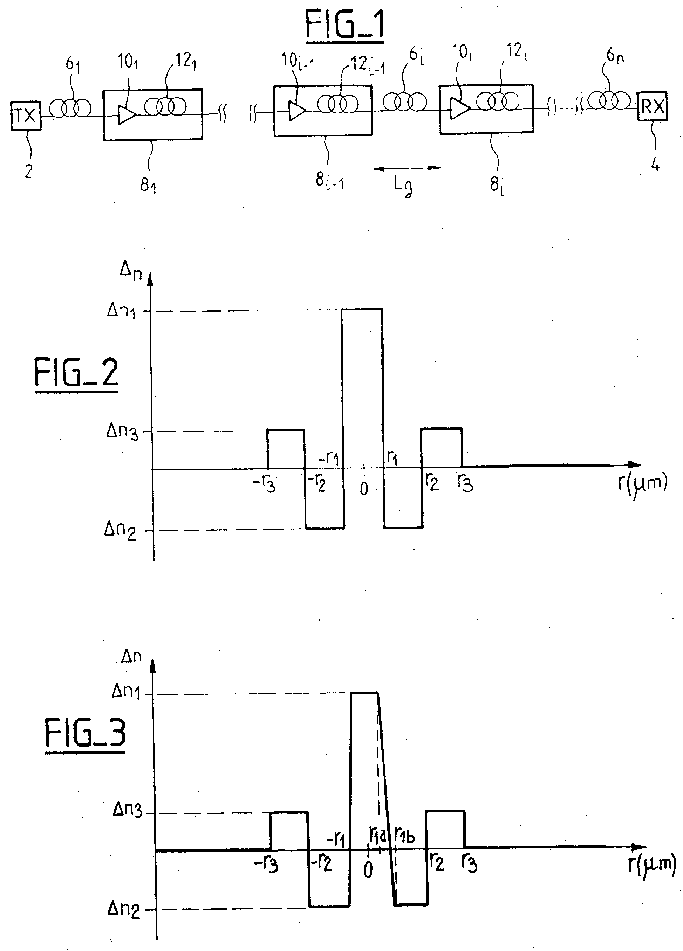

La figure 1 montre une représentation schématique d'un système de transmission à multiplexage en longueurs d'onde, selon un mode de réalisation de l'invention. On a représenté à la figure 1 l'émetteur TX 2 et le récepteur RX 4 du système de transmission, entre lesquels s'étend la fibre de ligne. Celle-ci est constituée de tronçons $6_l$ à $6_n$, séparés par des répéteurs $8_l$ à $8_{n-l}$; chaque répéteur $8_i$ présente un amplificateur $10_i$, dont la structure est sans incidence sur le fonctionnement de l'invention, et n'est donc pas décrite. En sortie de l'amplificateur est prévue une section $12_i$ de fibre de compensation de dispersion. Placer la fibre de compensation de dispersion en aval de l'amplificateur permet de limiter les effets d'une forte atténuation dans cette fibre. On note dans la suite $L_g$ la longueur de la fibre de ligne entre deux sections de fibre de compensation de dispersion; dans l'exemple de la figure, cette longueur correspond à la longueur séparant deux répéteurs.

Dans l'exemple de la figure 1, est prévue une section de fibre de compensation de dispersion dans chaque répéteur; il est aussi possible de ne pas prévoir de la fibre de compensation de dispersion dans chaque répéteur, mais uniquement dans certains des répéteurs; par exemple, on pourrait munir de fibre de compensation de dispersion un répéteur sur N, avec N un entier supérieur ou égal à deux. Dans un tel cas, on appelerait "longueur de la section de fibre de ligne" la longueur de la fibre de ligne entre deux répéteurs dans lesquels se trouve de la fibre de compensation de dispersion. D'autres modifications au système de transmission de la figure 1 sont possibles : ainsi, peuvent être prévus des filtres, un amplificateur en aval de la fibre de compensation de dispersion, etc.

Les critères proposés définissent des bornes, pour la fibre de compensation de dispersion, pour le rapport C/C' de la dispersion chromatique à la pente de dispersion chromatique d'une part, et pour le rapport C'/C" de la pente de dispersion chromatique à la dérivée première de la pente de la dispersion chromatique d'autre part. On impose donc :

$$\frac{C_g}{C'_g} \times \frac{1}{1 + C_{cum}/\left(L_g . C'_g . \Delta\lambda\right)} \leq \frac{C}{C'} \leq \frac{C_g}{C'_g} \times \frac{1}{1 - C_{cum}/\left(L_g . C'_g . \Delta\lambda\right)} \qquad (1)$$

Dans cette formule C et C' représentent la dispersion chromatique et la pente de dispersion chromatique de la fibre de compensation de dispersion, exprimées respectivement en ps/(nm.km) et en ps/(nm$^2$.km). $C_g$ et $C'_g$ représentent la dispersion chromatique et la pente de dispersion chromatique de la fibre de ligne, avec les mêmes unités.

$C_{cum}$ est la borne supérieure du module de la dispersion chromatique cumulée dans le système de transmission en ps/nm; la dispersion chromatique cumulée est l'intégrale de la dispersion chromatique sur toute la longueur du système de transmission, en intégrant par rapport à la longueur; macroscopiquement, pour une section de fibre de ligne et une section de fibre de compensation de dispersion, la dispersion chromatique cumulée est égale à la somme du produit de la dispersion chromatique de la fibre de ligne par la longueur de la section de fibre de ligne et du produit de la dispersion chromatique de la fibre de compensation par la longueur de la section de fibre de compensation. Cette dispersion chromatique cumulée se calcule pour une longueur d'onde donnée; la quantité $C_{cum}$ est le maximum du module de la dispersion chromatique cumulée pour les longueurs d'onde utilisées dans le système de transmission. $L_g$ est la longueur d'un tronçon de fibre de ligne, et $\Delta\lambda$ la moitié de la largeur de la bande du système de transmission.

La formule (1) revient à borner le rapport C/C', et non plus la seule dispersion chromatique comme dans l'état de la technique. En outre, la formule (1) fait intervenir la dispersion chromatique cumulée, ainsi que la largeur de bande du système. La formule (1) est une condition nécessaire mais pas suffisante pour que la dispersion chromatique cumulée dans le système reste inférieure à la borne supérieure du module de la dispersion chromatique cumulée $C_{cum}$ admise, sur toute la plage de longueur d'onde utilisée dans le système.

La formule (1) est de préférence vérifiée pour une longueur d'onde voisine de la longueur d'onde médiane utilisée dans le système. Il reste possible de vérifier la formule pour une autre longueur d'onde.

On impose, outre la contrainte (1), une contrainte sur le module du rapport entre la pente de dispersion chromatique et la dérivée première de la pente de dispersion chromatique pour obtenir une condition nécessaire et suffisante pour que le module de la dispersion chromatique cumulée dans le système reste inférieure à la borne supérieure $C_{cum}$ admise de dispersion chromatique, sur toute la plage de longueur d'onde utilisée dans le système. Cette deuxième contrainte s'écrit:

$$\left| \frac{C'}{C''} \right| \geq Max\left( \frac{\Delta\lambda}{2} \times \left( \frac{C.C'_g}{C'.C_g} \times \left( 1 \pm \frac{C_{cum}}{L_g.C'_g.\Delta\lambda} \right) - 1 \right)^{-1} \right) \qquad (2)$$

Dans cette formule, les notations sont les mêmes que ci-dessus. La fonction Max(x, y) est la fonction qui à deux réels x et y associe le plus grand des deux réels. Dans la formule (2), la fonction Max est appliquée aux deux valeurs du rapport calculées pour les deux valeurs possibles du signe "$\pm$".

Cette formule (2) fournit donc une borne inférieure au module du rapport entre la pente de dispersion chromatique et la dérivée première de la pente de la dispersion chromatique. Cette formule est vérifiée au centre de la plage spectrale considérée, ou au voisinage du centre de cette plage spectrale. Pour une transmission en bandes C et L, les formules sont calculées au voisinage de 1570 nm; cette valeur est choisie car la dispersion chromatique cumulée de l'ensemble fibre de ligne et fibre de compensation de dispersion dans ces bandes est sensiblement symétrique autour de 1570 nm. C'est donc à cette longueur d'onde que la dispersion est le mieux approximée par une parabole, et que la formule (2) donne la meilleure approximation. Si l'on s'éloigne de cette valeur, la valeur de la borne inférieure varie. Dans la pratique, il s'avère qu'une variation de $\pm$ 10 nm par rapport au centre de la plage spectrale conduit, pour obtenir les mêmes résultats en termes de compensation de dispersion, à multiplier par deux la borne inférieure, c'est-à-dire à multiplier par deux le terme de droite dans l'inégalité (2). Il suffit en pratique de vérifier la formule (2) pour une longueur d'onde dont la différence avec la longueur d'onde médiane du système de transmission est inférieure à 10% de la largeur de la plage.

On notera que les formules (1) et (2) sont calculées localement, en fonction de la longueur de la fibre de ligne à compenser. Les critères peuvent donc être calculés localement, i.e. au voisinage d'un répéteur ou d'une section de fibre de ligne. Dans ce cas, la borne supérieure $C_{cum}$ impose donc une limite au module de la dispersion chromatique cumulée dans la section précédente de fibre de ligne. En revanche, les contraintes peuvent aussi être calculées globalement, et dans ce cas, la borne supérieure $C_{cum}$ est une contrainte sur le module de la dispersion chromatique cumulée sur l'ensemble du système de transmission; cette contrainte est vérifiée sur toutes les sections de fibre de ligne. Le calcul local et le calcul global sont bien sûr de même effet si le système de transmission a une structure périodique. On notera en outre que la valeur de $C_{cum}$ peut varier en fonction de la longueur d'une section de fibre de ligne; ainsi, l'exemple donné plus bas concerne une valeur de $C_{cum}$ de 50 ps/nm, pour une longueur de section de fibre de ligne de 100 km. On pourrait aussi imposer une valeur $C_{cum}$ de 100 ps/nm pour des sections de fibre de ligne de 200 km; en moyenne, la dispersion chromatique cumulée dans le système de transmission resterait identique; seule varierait alors la valeur absolue atteinte sur une section de fibre de ligne. Plus généralement, une valeur du rapport $C_{cum}/L_g$ inférieure ou égale à 0,5 ps/(nm.km) convient; une valeur de 0,1 ps/(nm.km) est encore plus avantageuse, pour des systèmes de transmission à multiplexage en longueur d'onde à très haut débit.

Par rapport à l'état de la technique, la formule (1) donne une plage admissible d'erreur pour l'égalité entre les rapports C/C'et $C_g/C'_g$. La formule (2), qui s'ajoute à la formule (1), impose une contrainte sur la valeur absolue du rapport C'/C''. Ces formules permettent de prendre en compte la largeur spectrale d'intérêt pour le système de transmission.

Ces deux formules assurent que la fibre de compensation de dispersion compense efficacement la dispersion chromatique comme la pente de dispersion chromatique sur toute la largeur spectrale utilisée dans le système de transmission; plus spécifiquement, le système présente alors sur toute la largeur de transmission $2.\Delta\lambda$ une dispersion chromatique cumulée en valeur absolue inférieure à $C_{cum}$.

Outre la première formule, ou les deux formules, il est avantageux que la fibre de compensation de dispersion présente une ou plusieurs des caractéristiques suivantes:

- des pertes par courbure inférieures à 400 dB/m, et de préférence inférieures à 100 dB dB/m, pour une longueur d'onde entre 1530 et 1620 nm, lorsque la fibre est enroulée sur un manchon de 10 mm de rayon;
- des pertes par courbure inférieures à 0,05 dB, et de préférence inférieures à $10^{-3}$ dB, pour une longueur d'onde entre 1530 et 1620 nm, pour un enroulement de 100 tours sur un manchon de 30 mm de rayon;
- un rapport entre la dispersion chromatique et l'atténuation inférieur ou égal à - 100 ps/(nm.dB) pour une longueur d'onde entre 1530 et 1620 nm;
- Une aire effective supérieure ou égale à 12 $\mu m^2$, de préférence supérieure ou égale à 15 $\mu m^2$, voire à 20 $\mu m^2$ pour une longueur d'onde de 1550 nm;
- une dispersion chromatique inférieure ou égale à -40 ps/(nm.km), de préférence inférieure ou égale à -50 ps/(nm.km), pour une longueur d'onde de 1550 nm;
- Une sensibilité aux micro-courbures inférieure ou égale à 1, et de préférence inférieure ou égale à 0,5 pour une longueur d'onde de 1550 nm;
- une différence entre l'indice en tout point de la fibre et l'indice de la gaine inférieure ou égale à $30.10^{-3}$.
- une dispersion modale de polarisation inférieure ou égale à 0,5 ps/km$^{1/2}$ pour une longueur d'onde de 1550 nm;
- une atténuation inférieure à 1 dB/km et de préférence à 0.8 dB/km pour une longueur d'onde de 1550 nm;

La valeur de la dispersion chromatique permet de limiter la longueur de fibre de compensation de dispersion, et donc l'atténuation dans cette fibre; La borne sur les pertes par courbures permet notamment un enroulement de la fibre de compensation de dispersion dans les répéteurs. Ces contraintes sont de préférence respectées dans toute la plage de longueurs d'onde utilisée dans le système de transmission. La contrainte sur la surface efficace permet de limiter les effets non linéaires dans la fibre de compensation de dispersion ; cette contrainte est avantageusement vérifiée au voisinage de 1550 nm. La fibre présente en outre avantageusement une dispersion modale de polarisation inférieure ou égale à 0,5 ps/km$^{1/2}$; cette valeur de la dispersion modale de polarisation assure une bonne transmission pour les hauts débits; elle est mesurée au voisinage d'une longueur d'onde de 1550 nm. La fibre peut aussi présenter une atténuation inférieure à 1 dB/km, voire à 0,8 dB/km; ces valeurs d'atténuation limitent les pertes dans la fibre de compensation; elles sont mesurées au voisinage d'une longueur d'onde de 1550nm.

On donne maintenant des exemples de système de transmission utilisant respectivement comme fibre de ligne de la fibre à saut d'indice et de la fibre à dispersion décalée positive.

Fibre à saut d'indice.

Dans l'exemple de la fibre à saut d'indice, on considère une fibre présentant les caractéristiques suivantes:

- dispersion chromatique à 1570 nm : 18.5 ps/(nm.km);
- pente de dispersion chromatique à 1570 nm : 0.058 ps/(nm$^2$.km);
- longueur d'onde de coupure en câble inférieure à 1300 nm
- surface efficace à 1570 nm : 81 $\mu m^2$;

Une telle fibre peut présenter une différence entre l'indice du coeur et l'indice de la gaine de l'ordre de $5.10^{-3}$, et un rayon de coeur de l'ordre de 4.5 $\mu m$. Pour une telle fibre de ligne, et un système de transmission en bandes C et L entre 1530 et 1610 nm, les formules (1) et (2) données plus haut fournissent, pour une longueur de section de fibre de ligne de 100 km et pour une dispersion chromatique cumulée inférieure à 50 ps/nm :

$$260 \text{ nm} \leq C/C' \leq 400 \text{nm} \tag{3}$$

et

$$\left|\frac{C'}{C''}\right| \geq Max\left(20 \times \left(\frac{C}{C'}\frac{1}{320} \times (1 \pm 0.22) - 1\right)^{-1}\right)$$

(4)

Ces formules peuvent se généraliser à d'autres types de fibre à saut d'indice; elles s'écrivent alors:

$$a \times \frac{1}{1+b} \leq \frac{C}{C'} \leq a \times \frac{1}{1-b} \qquad (5)$$

et

$$\left|\frac{C'}{C''}\right| \geq Max\left(c \times \left(\frac{C}{C'}\frac{1}{a} \times (1 \pm b) - 1\right)^{-1}\right) \qquad (6).$$

Dans ce cas, a, b et c sont des paramètres représentatifs de la fibre de ligne et du système de transmission, qui vérifient :

- $280 \leq \alpha \leq 360$ nm
- $0.2 \leq b \leq 0.25$
- $c \leq 25$ nm.

b est sans dimension, mais a et c ont la dimension d'une longueur d'onde. Le paramètre a est représentatif du rapport C/C' de la fibre de ligne à compenser. Le paramètre b est un correctif résultant de l'application des formules précédentes. Le paramètre c correspond au quart de la largeur spectrale de la bande considérée; le choix d'une valeur de 25 nm est adapté à des systèmes présentant une largeur spectrale de moins de 100 nm, par exemple des systèmes de transmission en bandes C et L élargies. La relation (5) est vérifiée pour une longueur d'onde utilisée dans le système de transmission, typiquement pour une longueur d'onde comprise entre 1530 et 1610 nm. La relation (6) est vérifiée pour une longueur d'onde voisine de la longueur d'onde médiane utilisée dans le système de transmission; une valeur de longueur d'onde voisine de 1570 nm, ou entre 1565 et 1575 nm convient.

Ces critères peuvent être satisfaits, pour les fibres présentant les profils des figures 2 ou 3, avec les valeurs données dans les tableaux ci-dessous. Le profil de la figure 2 est un profil d'indice de consigne du type en rectangle, avec une tranchée enterrée et un anneau. Il présente, en partant du centre de la fibre:

- une partie centrale avec un indice sensiblement constant supérieur ou égal à l'indice de la gaine;
- une partie annulaire d'indice inférieur ou égal à l'indice de la gaine ;

l'ensemble constituant un profil d'indice dit "en rectangle avec une tranchée enterrée ou déprimée".

Autour de la tranchée enterrée, la fibre de la figure 2 présente un anneau, c'est-à-dire une partie d'indice supérieur à l'indice de la gaine, d'où le qualificatif de profil en rectangle avec une tranchée enterrée et un anneau.

On note dans la suite $\Delta n_1$ la différence entre l'indice de la partie centrale et l'indice de la gaine de la fibre, $\Delta n_2$ la différence entre l'indice de la tranchée enterrée et l'indice de la gaine de la fibre et $\Delta n_3$ la différence entre l'indice de l'anneau et l'indice de la gaine de la fibre. Comme expliqué plus haut, $\Delta n_1$ et $\Delta n_3$ ont une valeur positive, tandis que $\Delta n_2$ a une valeur négative.

Le profil de la figure 3 est un profil d'indice du type en trapèze, avec une tranchée enterrée et un anneau. La seule différence entre ce profil et celui représenté en figure 2 réside dans le fait que la partie centrale a une forme de trapèze et non de rectangle, avec un rayon minimum $r_{1a}$, un rayon maximum $r_{1b}$ et un rayon $r_1$ correspondant au rayon de la partie centrale au point où elle croise l'axe des abscisses. On peut aussi appeler "petite base du trapèze" la partie centrale de rayon $r_{1a}$ et d'indice constant supérieur à l'indice de la gaine. La "grande base du trapèze" correspond au rayon $r_{1b}$ sur la figure, et s'étend jusqu'au rayon intérieur de la tranchée enterrée. Dans le cas de ce profil en trapèze, on note $r_1$ le rayon de la partie centrale de la fibre qui présente un indice supérieur à l'indice de la fibre.

Des exemples de fibres de compensation de dispersion sont donnés dans le tableau ci-dessous. Les fibres S1 à S4 ont un profil du type de la figure 2, tandis que les fibres S5 à S8 ont un profil du type de la figure 3.

Tableau 1

|  | $r_{1a}$ ($\mu$m) | $r_1$ ($\mu$m) | $r_{1b}$ ($\mu$m) | $r_2$ ($\mu$m) | $r_3$ ($\mu$m) | $10^3\Delta n_1$ | $10^3\Delta n_2$ | $10^3\Delta n_3$ |
|---|---|---|---|---|---|---|---|---|
| Fibre S1 | 1.37 | 1.37 | 1.37 | 4.94 | 6.02 | 25.6 | -5.8 | 12.0 |
| Fibre S2 | 1.47 | 1.47 | 1.47 | 4.36 | 7.57 | 23.1 | -5.9 | 2.9 |
| Fibre S3 | 1.53 | 1.53 | 1.53 | 4.79 | 7.84 | 22.5 | -5.0 | 4.1 |
| Fibre S4 | 1.64 | 1.64 | 1.64 | 4.82 | 6.70 | 20.4 | -6.5 | 7.3 |
| Fibre S5 | 1.20 | 1.65 | 1.78 | 4.94 | 7.12 | 23.6 | -6.1 | 6.8 |
| Fibre S6 | 1.20 | 1.78 | 1.93 | 4.49 | 7.25 | 22.5 | -6.0 | 4.8 |
| Fibre S7 | 1.14 | 1.74 | 1.9 | 4.45 | 7.45 | 23.9 | -6.2 | 5.1 |
| Fibre S8 | 1.48 | 1.90 | 2.01 | 5.00 | 7.82 | 18.7 | -4.9 | 5.2 |

Les fibres du Tableau 1 satisfont les critères (1) et (2) visés plus haut, pour la fibre SMF considérée, et pour les valeurs $C_{cum}$, $L_g$ et $\Delta\lambda$ mentionnées plus haut. Elles présentent les caractéristiques de propagation données dans le tableau 2 ci-dessous pour une longueur d'onde de 1570nm.

Tableau 2

|  | $\lambda_{cth}$ nm | $2W_{02}$ $\mu$m @1570 | $S_{eff}$ $\mu$m$^2$ @1570 | C ps/nm.km @1570 | C/C' nm @1570 | Fs nm @1570 | \|C'/C"\| nm @1570 | PC$_{1620}$ dB/m | $S_{\mu c}$ @1570 |
|---|---|---|---|---|---|---|---|---|---|
| Fibre S1 | 1680 | 4.5 | 16 | -120 | 365 | 229 | >650 | <100 | <0,5 |
| Fibre S2 | 1660 | 4.7 | 17 | -100 | 375 | 320 | >350 | <100 | <0,5 |
| Fibre S3 | 1780 | 4.7 | 17 | -75 | 355 | 178 | >200 | <100 | <0,5 |
| Fibre S4 | 1710 | 4.9 | 19 | -90 | 330 | 114 | >850 | <100 | <0,5 |
| Fibre S5 | 1795 | 4.6 | 17 | -110 | 280 | 260 | >450 | <100 | <0,5 |
| Fibre S6 | 1740 | 4.8 | 18 | -85 | 380 | 400 | >450 | <100 | <0,5 |
| Fibre S7 | 1860 | 4.6 | 17 | -105 | 330 | 114 | >800 | <100 | <0,5 |
| Fibre S8 | 1910 | 5.3 | 22 | -75 | 390 | 800 | >1000 | <100 | <0,5 |

Dans ce tableau, $\lambda_{cth}$ est la longueur d'onde de coupure théorique de la fibre, exprimée en nanomètres; dans la pratique, la longueur d'onde de coupure mesurée sur câble est inférieure de plusieurs centaines de nm ; on comprend que la fibre est effectivement monomode dans la plage de longueurs d'onde des signaux utiles, notamment dans les bandes C et L. $2W_{02}$ est le diamètre de mode, en micromètres; $S_{eff}$ est l'aire effective, en micromètres carrés. C est la dispersion chromatique exprimée en ps/(nm.km). C' est la pente de dispersion chromatique, c'est-à-dire la dérivée de la dispersion chromatique par rapport à la longueur d'onde, exprimée en ps/(nm$^2$.km); le rapport C/C' de la dispersion chromatique à la pente de dispersion chromatique a donc la dimension d'une longueur d'onde, et est exprimé en nanomètres. $F_S$ est la borne inférieure du module du rapport C'/C", donnée dans la formule (4) plus haut. C" est la dérivée première de la pente de la dispersion chromatique par rapport à la longueur d'onde; le module du rapport C'/C", porté dans le tableau a encore la dimension d'une longueur, et est exprimé en nanomètres. Il est encore avantageux que la fibre présente des pertes par courbure acceptables à 1620nm car ceci limite les pertes dans toute la plage d'utilisation allant de 1530 à 1620 nm. PC$_{1620}$ est une mesure des pertes linéiques par courbures dans la fibre; ces pertes sont mesurées à une longueur d'onde de 1620 nm , par enroulement de la fibre autour d'une bobine de diamètre 10 mm. Enfin, $S_{\mu c}$ est un coefficient sans dimension, représentatif de la sensibilité de la fibre aux microcourbures; ce coefficient est dans le tableau mesuré par rapport à une fibre de l'état de la technique commercialisée par la demanderesse sous l'appellation ASMF 200. Ce coefficient peut être mesuré par la méthode d'écrasement de la fibre entre deux grilles, connue en soi.

Le tableau montre que les fibres du tableau 1 présentent des caractéristiques de propagation permettant leur utilisation en tant que fibre de compensation de dispersion dans un répéteur ou dans un amplificateur d'un système de transmission à fibre optique. La fibre est adaptée par les valeurs de C/C' et du module du rapport C'/C" à compenser la dispersion chromatique d'une fibre SMF.

Dans tous les exemples du tableau 1, des variations de 5 % de l'indice $\Delta n_1$ de la partie centrale, ou de 10%

des indices $\Delta n_2$ et $\Delta n_3$ de la tranchée enterrée et de l'anneau permettent d'obtenir des résultats similaires. Il en est de même des rayons, qui peuvent varier de 10% pour $r_1$ et $r_2$ et de 5% pour $r_3$ par rapport aux valeurs données dans les exemples du tableau de la figure 1, tout en obtenant des résultats analogues.

Les valeurs du tableau 2 sont données pour une longueur d'onde de 1570 nm; à des longueurs d'onde de 1550 nm et 1590 nm, les fibres présentent les valeurs des différents paramètres fournies dans le tableau 3 ci-dessous.

Tableau 3

|  | $S_{eff}\ \mu m^2$ @1550 | C ps/nm.km @1550 | C/C' nm @1550 | $S_{eff}\ \mu m^2$ @1590 | C ps/nm.km @1590 | C/C' nm @1590 |
|---|---|---|---|---|---|---|
| Fibre S1 | 15 | -115 | 350 | 17 | -130 | 400 |
| Fibre S2 | 16 | -90 | 355 | 18 | -105 | 380 |
| Fibre S3 | 16 | -75 | 370 | 18 | -85 | 365 |
| Fibre S4 | 18 | -85 | 310 | 21 | -100 | 385 |
| Fibre S5 | 16 | -105 | 275 | 19 | -120 | 300 |
| Fibre S6 | 17 | -85 | 370 | 19 | -95 | 415 |
| Fibre S7 | 15 | -95 | 335 | 17 | -110 | 380 |
| Fibre S8 | 21 | -70 | 365 | 23 | -80 | 435 |

Du point de vue du profil, les dimensions de la fibre de compensation de dispersion peuvent être choisies en appliquant l'une ou plusieurs des inégalités données ci-dessous; d'une part, en ce qui concerne la partie centrale en rectangle ou en anneau, on a avantageusement :

- $18.10^{-3} \leq \Delta n_1 \leq 30.10^{-3}$, et

- $1,2 \leq r_1 \leq 2,1\ \mu m$,

Pour la tranchée enterrée, on peut choisir les valeurs de différence d'indice $\Delta n_2$ et de rayon extérieur $r_2$ de sorte à vérifier :

- $-8,5.10^{-3} \leq \Delta n_2 \leq -4,5.10^{-3}$,

- $3,4 \leq r_2 \leq 6,1\ \mu m$,

Pour l'anneau, on peut choisir les valeurs de différence d'indice $\Delta n_3$ et de rayon extérieur $r_3$ de sorte à vérifier :

- $1.10^{-3} \leq \Delta n_3 \leq 15.10^{-3}$,

- $5,9 \leq r_3 \leq 8\ \mu m$,

D'autres caractérisations de la fibre sont possibles. Ainsi, on peut utiliser le paramètre $S_1$ défini par

$$S_1 = 2.\int_0^{r_1} \Delta n(r).r.dr$$

Ce paramètre est homogène au produit d'une surface par un indice. Ce paramètre s'applique simplement au profil en trapèze comme au profil en rectangle, et est représentatif de l'augmentation d'indice au voisinage du coeur de la fibre. Il est de préférence compris entre $48.10^{-3}$ et $65.10^{-3}\ \mu m^2$.

Le paramètre

$$S_{11} = 3. \int_0^{r1} \Delta n(r).r^2 .dr$$

est quant à lui homogène au produit d'un indice par le carré d'une surface. Physiquement, ce paramètre est représentatif de la correspondance entre un profil en rectangle et un profil en trapèze, dans la théorie des fibres équivalentes. Ce paramètre est de préférence inférieur à $110.10^{-3}$ $\mu m^3$.

On peut encore utiliser le paramètre $S_2$, défini par

$$S_2 = 2. \int_{r1}^{r2} \Delta n(r).r.dr$$

Ce paramètre est homogène au produit d'une surface par un indice. Ce paramètre est représentatif de la diminution d'indice dans la tranchée enterrée. Il est de préférence compris entre $-155.10^{-3}$ et $-75.10^{-3}$ $\mu m^2$.

De même, le paramètre $S_3$ défini par

$$S_3 = 2. \int_{r2}^{r3} \Delta n(r).r.dr$$

est homogène au produit d'une surface par un indice, et est représentatif de l'augmentation d'indice dans l'anneau. Il est de préférence compris entre $70.10^{-3}$ et $210.10^{-3}$ $\mu m^2$.

Un autre paramètre possible est le paramètre $S_{123}$, qui s'écrit

$$S_{123} = 2. \int_0^{r3} \Delta n(r).r.dr$$

Ce paramètre est représentatif de l'augmentation moyenne de l'indice, par rapport à l'indice de la silice, sur l'ensemble du profil. Il est de préférence supérieur à $20.10^{-3}$ $\mu m^2$.

Un de ces paramètres, ou la combinaison de plusieurs de ces paramètres permettent de définir le profil d'une fibre, qui peut être utilisée comme fibre de compensation de dispersion d'une fibre à saut d'indice.

<u>Fibre DSF+.</u>

Dans l'exemple de la fibre à dispersion décalée positive, on considère une fibre présentant les caractéristiques suivantes:

- dispersion chromatique à 1570 nm : 9.2 ps/(nm.km);
- pente de dispersion chromatique à 1570 nm : 0.058 ps/(nm$^2$.km);
- longueur d'onde de coupure en câble inférieure à 1300nm
- surface efficace à 1570 nm : 66 $\mu m^2$;

Une telle fibre est commercialisée par la demanderesse sous la référence TeraLight; elle est décrite dans la demande de brevet n° 99 02 028 du 18 février 1999. Pour une telle fibre de ligne, et un système de transmission en bandes C et L entre 1530 et 1610 nm, les formules (1) et (2) données plus haut fournissent, pour une longueur de section de fibre de ligne de 100 km et pour une dispersion chromatique cumulée inférieure à 50 ps/nm :

$$130\,nm \le C/C' \le 200nm \tag{7}$$

et

$$\left|\frac{C'}{C''}\right| \ge Max\left(\frac{20}{\dfrac{C}{C}\dfrac{1}{160} \times (1 \pm 0.22) - 1}\right) \qquad (8)$$

Ces critères sont encore une fois une application spécifique des formules généralisées (5) et (6) données plus haut; dans le cas d'une fibre de ligne à dispersion décalée positive, les paramètres a, b et c définis plus haut vérifient typiquement:

- 120 ≤ a ≤ 200 nm
- 0.2 ≤ b ≤ 0.25
- c ≤ 25 nm.

Ces critères peuvent être satisfaits, pour les fibres présentant les profils des figures 2 ou 3, avec les valeurs données dans les tableaux ci-dessous. Les notations utilisées pour ces profils sont les mêmes que plus haut. Les fibres T1 à T4 sont des fibres à coeur en rectangle, et les fibres T5 et T6 des fibres à coeur en trapèze.

Tableau 4

|  | $r_{1a}$ ($\mu$m) | $r_1$ ($\mu$m) | $r_{1b}$ ($\mu$m) | $r_2$ ($\mu$m) | $r_3$ ($\mu$m) | $10^3\Delta n_1$ | $10^3\Delta n_2$ | $10^3\Delta n_3$ |
|---|---|---|---|---|---|---|---|---|
| Fibre T1 | 1.44 | 1.44 | 1.44 | 4.88 | 7.70 | 24.2 | -7.2 | 5.3 |
| Fibre T2 | 1.45 | 1.45 | 1.45 | 5.39 | 6.49 | 24.2 | -8.1 | 14.3 |
| Fibre T3 | 1.79 | 1.79 | 1.79 | 6.07 | 7.12 | 18.3 | -6.3 | 17.4 |
| Fibre T4 | 1.78 | 1.78 | 1.78 | 5.78 | 7.41 | 18.5 | -6.9 | 10.9 |
| Fibre T5 | 1.30 | 1.55 | 1.82 | 4.25 | 7.67 | 22.9 | -9.9 | 4.4 |
| Fibre T6 | 1.31 | 1.69 | 1.84 | 4.87 | 6.43 | 23.6 | -9.4 | 10.2 |

Les fibres du Tableau 4 satisfont les critères (1) et (2) visés plus haut, pour la fibre à dispersion décalée considérée, et pour les valeurs $C_{cum}$, $L_g$ et $\Delta\lambda$ mentionnées plus haut. Elles présentent les caractéristiques de propagation données dans le tableau 5 ci-dessous, pour une longueur d'onde de 1570 nm.

Tableau 5

|  | $\lambda_{cth}$ nm @1570 | $2W_{02}$ $\mu$m @1570 | $S_{eff}$ $\mu$m$^2$ @1570 | C ps/nm.km @1570 | C/C' Nm @1570 | Ft Nm @1570 | \|C'/C"\| nm @1570 | $PC_{1620}$ dB/m | $S_{\mu c}$ @1570 |
|---|---|---|---|---|---|---|---|---|---|
| Fibre T1 | 1845 | 4.5 | 16 | -135 | 165 | 114 | >150 | <100 | <0,5 |
| Fibre T2 | 1711 | 4.4 | 15 | -135 | 150 | 130 | >150 | >100 | <0,5 |
| Fibre T3 | 2020 | 5.1 | 22 | -85 | 185 | 267 | >500 | <100 | <0,5 |
| Fibre T4 | 2010 | 5.0 | 21 | -90 | 180 | 200 | >200 | <100 | <0,5 |
| Fibre T5 | 1.785 | 4.6 | 17 | -155 | 170 | 133 | >700 | <100 | <0,5 |
| Fibre T6 | 1740 | 4.3 | 15 | -95 | 175 | 160 | >200 | <100 | <0,5 |

Les notations utilisées dans ce tableau sont les mêmes que celles du tableau 2 relatif à la fibre SMF, à cela près que la borne inférieure du rapport du module C'/C" est notée Ft et non pas Fs et est donnée par la formule (8).

Le tableau montre que les fibres du tableau 4 présentent des caractéristiques de propagation permettant leur utilisation en tant que fibre de compensation de dispersion dans un répéteur ou dans un amplificateur d'un système de transmission à fibre optique utilisant de la fibre à dispersion décalée comme fibre de ligne. La fibre est adaptée par les valeurs de C/C' et du module du rapport C'/C" à compenser la dispersion chromatique cumulée dans la fibre de ligne.

Comme dans les exemples du tableau 1, dans tous les exemples du tableau 3, des variations de 5 % de l'indice $\Delta n_1$ de la partie centrale, ou de 10% des indices $\Delta n_2$ et $\Delta n_3$ de la tranchée enterrée et de l'anneau permettent d'obtenir des résultats similaires. Il en est de même des rayons, qui peuvent varier de 10% pour $r_1$ et $r_2$ et de 5% pour $r_3$ par rapport aux valeurs données dans les exemples du tableau de la figure 1, tout en obtenant des résultats analogues.

Comme dans le cas précédent, le tableau 6 donnent les paramètres de propagation, pour une longueur d'onde de 1550 nm et 1590 nm.

Tableau 6

| | $S_{eff}$ $\mu m_2$ @1550 | C ps/nm.km @1550 | C/C' Nm @1550 | $S_{eff}$ $\mu m^2$ @1590 | C ps/nm.km @1590 | C/C' Nm @1590 |
|---|---|---|---|---|---|---|
| Fibre T1 | 15 | -120 | 160 | 18 | -150 | 170 |
| Fibre T2 | 14 | -120 | 150 | 17 | -150 | 155 |
| Fibre T3 | 20 | -80 | 175 | 24 | -105 | 215 |
| Fibre T4 | 19 | -82 | 170 | 22 | -111 | 190 |
| Fibre T5 | 16 | -140 | 160 | 19 | -170 | 195 |
| Fibre T6 | 14 | -85 | 175 | 16 | -110 | 175 |

Du point de vue du profil, les dimensions de la fibre de compensation de dispersion peuvent être choisies en appliquant l'une ou plusieurs des inégalités données ci-dessous; d'une part, en ce qui concerne la partie centrale en rectangle ou en anneau, on a avantageusement :

- $18.10^{-3} \leq \Delta n_1 \leq 30.10^{-3}$, et

- $1,2 \leq r_1 \leq 1,9$ $\mu m$,

Pour la tranchée enterrée, on peut choisir les valeurs de différence d'indice $\Delta n_2$ et de rayon extérieur $r_2$ de sorte à vérifier :

- $-10.10^{-3} \leq \Delta n_2 \leq -5,8.10^{-3}$,

- $3,4 \leq r_2 \leq 6,1$ $\mu m$,

Pour l'anneau, on peut choisir les valeurs de différence d'indice $\Delta n_3$ et de rayon extérieur $r_3$ de sorte à vérifier :

- $1.10^{-3} \leq \Delta n_3 \leq 17,5.10^{-3}$,

- $6,25 \leq r_3 \leq 8,3$ $\mu m$,

Les paramètres $S_1$, $S_{11}$, $S_2$, $S_3$ et $S_{123}$ définis plus haut peuvent vérifier les inégalités suivantes:

- $50.10^{-3} \leq S_1 \leq 60.10^{-3}$ $\mu m^2$;
- $S_{11} \leq 110.10^{-3}$ $\mu m^3$;
- $-230.10^{-3} \leq S_2 \leq -145.10^{-3}$ $\mu m^2$;
- $180.10^{-3} \leq S_3 \leq 260.10^{-3}$ $\mu m^2$;
- $20.10^{-3} \leq S_{123} \leq 145.10^{-3}$ $\mu m^2$.

Bien entendu, la présente invention n'est pas limitée aux exemples et modes de réalisation décrits et représentés, mais elle est susceptible de nombreuses variantes accessibles à l'homme de l'art. Ainsi, les formules (1) ou (2) ci-dessus s'appliquent aussi à d'autres fibres que les fibres à saut d'indice et à dispersion décalée qui sont données à titre d'exemple plus haut. On peut aussi imposer aux paramètres $C_{cum}$, $L_g$ ou $\Delta\lambda$ d'autres valeurs que celles qui sont proposées dans les exemples. Typiquement, dans les systèmes de transmission actuels en multiplexage de longueurs d'ondes, $C_{cum}$ est inférieure à 50 ps/nm, mais des valeurs de l'ordre de 100 ps/nm ou 200 ps/nm restent possibles. L'exemple de longueur $L_g$ de 100 km correspond à la distance entre les répéteurs d'un système de transmission terrestre de l'état de l'art; cette distance dépend en fait des pertes dans la fibre de ligne, et pourrait augmenter avec l'amélioration des fibres de ligne. Enfin, la demi-largeur de la bande $\Delta\lambda$ pourrait aussi être différente, si l'on utilise des bandes autres que les bandes C et L. Par exemple, pour une transmission en bandes C et S, entre 1460 nm et 1530 nm, on aurait une valeur de $\Delta\lambda$ de 35 nm; pour une transmission en bandes C, L et S, on aurait une valeur de 80 nm.

**Revendications**

1. Un système de transmission à fibre optique, présentant une section ($6_i$) de fibre de ligne et une section ($12_j$) de fibre de compensation compensant la dispersion chromatique dans la section dé fibre de ligne, dans lequel la dispersion chromatique C de la fibre de compensation de dispersion, la pente C' de la dispersion chromatique de cette fibre vérifient, pour une longueur d'onde de la plage de longueur d'onde utilisée dans le système de transmission:

$$\frac{C_g}{C'_g} \times \frac{1}{1+C_{cum}/(L_g.C'_g.\Delta\lambda)} \leq \frac{C}{C'} \leq \frac{C_g}{C'_g} \times \frac{1}{1-C_{cum}/(L_g.C'_g.\Delta\lambda)} \qquad (1)$$

avec $C_g$ la dispersion chromatique de la fibre de ligne, $C'_g$ la dérivée par rapport à la longueur d'onde de la dispersion chromatique de la fibre de ligne, $C_{cum}$ la borne supérieure du module de la dispersion chromatique cumulée admise dans la section de fibre de ligne et $\Delta\lambda$ la demi-largeur de la plage de longueurs d'onde utilisée dans le système de transmission, et dans lequel la pente de la dispersion chromatique C' et la dérivée première de cette pente C" par rapport à la longueur d'onde de la fibre de compensation de dispersion vérifient, pour une longueur d'onde sensiblement médiane de la plage de longueur d'onde utilisée dans le système de transmission:

$$\left|\frac{C}{C''}\right| \geq Max\left(\frac{\Delta\lambda}{2} \times \left(\frac{C.C'_g}{C'.C_g} \times \left(1 \pm \frac{C_{cum}}{L_g.C_g.\Delta\lambda}\right) - 1\right)^{-1}\right) \qquad (2)$$

, la fibre de compensation de dispersion présentant une dispersion chromatique C inférieure à -40 ps/(nm.km), voire inférieure à -45 ps/(nm.km) à 1550nm, une pente C' de la dispersion chromatique et une dérivée première C" de pente de la dispersion chromatique par rapport à la longueur d'onde vérifiant:

$$a \times \frac{1}{1+b} \leq \frac{C}{C'} \leq \alpha \times \frac{1}{1-b}$$

et

$$\left|\frac{C'}{C''}\right| \geq Max\left(c \times \left(\frac{C}{C'}\frac{1}{a} \times (1 \pm b) - 1\right)^{-1}\right)$$

pour une longueur d'onde voisine de 1570 nm avec a, b et c des paramètres vérifiant:

$280 \leq a \leq 360$ nm ou $120 \leq a \leq 200$ nm
$0.2 \leq b \leq 0.25$ et
$c \leq 25$ nm.

2. Le système de la revendication 1, dans lequel les contraintes (1) et (2) sont vérifiées pour une longueur d'onde sensiblement médiane de la plage de longueur d'onde utilisée dans le système de transmission.

3. Le système de la revendication 1 ou 2, **caractérisé en ce que** la différence entre la dite longueur d'onde sensiblement médiane et la longueur d'onde médiane de la plage de longueurs d'onde utilisée dans le système de transmission diffère de moins de 10 % de la plage de longueurs d'onde utilisée dans le système de transmission.

4. Le système de l'une des revendications 1 à 3, **caractérisé en ce que** la fibre de compensation de dispersion présente des pertes par courbure inférieures ou égales à 400 dB/m voire inférieures ou égales à 100 dB/m pour un enroulement autour d'un manchon de 10 mm de rayon, dans toute la plage de longueurs d'onde utilisée dans le système de transmission.

5. Le système de l'une des revendications 1 à 4, **caractérisé en ce que** la fibre de compensation de dispersion présente des pertes par courbure inférieures ou égales à 0,05 dB voire inférieures ou égales à $10^{-3}$ dB pour un enroulement de 100 tours sur un manchon de 30 mm de rayon, dans toute la plage de longueurs d'onde utilisée dans le système de transmission.

6. Le système de l'une des revendications 1 à 5, **caractérisé en ce que** la fibre de compensation de dispersion présente une section efficace supérieure ou égale à 12 $\mu m^2$ à 1550nm.

7. Le système de l'une des revendications 1 à 6, **caractérisé en ce que** la fibre de compensation de dispersion présente une dispersion modale de polarisation inférieure ou égale à 0,5 ps/km$^{1/2}$ à 1550nm.

8. Le système de l'une des revendications 1 à 7, **caractérisé en ce que** la fibre de compensation de dispersion présente une atténuation inférieure à 1 dB/km, voire à 0,8 dB/km à 1550nm.

9. Le système de l'une des revendications 1 à 8, **caractérisé en ce que** le rapport entre la borne supérieure du module de la dispersion chromatique cumulée $C_{cum}$ et la longueur $L_g$ d'une section de fibre de ligne est inférieur à 0,5 ps/(nm.km), voire à 0,1 ps/(nm.km).

10. Le système de l'une des revendications 1 à 9, **caractérisé en ce que** la fibre de ligne est une fibre à saut d'indices

11. Le système de l'une des revendications 1 à 9, **caractérisé en ce que** la fibre de ligne est une fibre à dispersion décalée à dispersion chromatique positive.

12. Le système de l'une des revendications 1 à 11, **caractérisé en ce que** la fibre de compensation de dispersion présente un profil d'indice en rectangle avec tranchée enterrée et anneau.

13. Le système de l'une des revendications 1 à 11, **caractérisé en ce que** la fibre de compensation de dispersion présente un profil d'indice en trapèze avec tranchée enterrée et anneau.

14. Le système de l'une des revendications 1 à 13, **caractérisée en ce que** la fibre de compensation de dispersion présente des pertes par courbure inférieures ou égales à 400 dB/m voire inférieures ou égales à 100 dB/m pour un enroulement autour d'un manchon de 10 mm de rayon, pour les longueurs d'onde comprises entre 1530 et 1620 nm.

15. Le système de l'une des revendications 1 à 14, **caractérisée en ce que** la fibre de compensation de dispersion présente des pertes par courbure inférieures ou égales à 0,05 dB voire inférieures ou égales à $10^{-3}$ dB pour un enroulement de 100 tours sur un manchon de 30 mm de rayon, pour les longueurs d'onde comprises entre 1530 et 1620 nm.

16. Le système de l'une des revendications 1 à 15, **caractérisée en ce que** la fibre de la compensation de dispersion présente une section efficace supérieure ou égale à 12 $\mu m^2$ à 1550nm.

17. Le système de l'une des revendications 1 à 16, **caractérisée en ce qu'**elle présente une dispersion modale de polarisation inférieure ou égale à 0,5 ps/km$^{1/2}$ à 1550 nm.

18. Le système de l'une des revendications 1 à 17, **caractérisée en ce qu'**elle présente une atténuation inférieure à 1 dB/km, voire à 0,8 dB/km à 1550 nm.

19. Le système de l'une des revendications 1 à 18, **caractérisée en ce que**, à condition que $280 \le a \le 360$ nm, la différence ($\Delta n_1$) entre l'indice du rectangle ou du trapèze et l'indice de la gaine est comprise entre $18.10^{-3}$ et $30.10^{-3}$, et **en ce que** le rayon ($r_1$) de la partie de la fibre présentant un indice supérieur à celui de la gaine est compris entre 1,2 et 2,1 $\mu$m.

**20.** Le système de l'une des revendications 1 à 19, **caractérisée en ce que**, à condition que $280 \leq a \leq 360$ nm, la différence ($\Delta n_2$) entre l'indice de la tranchée déprimée et l'indice de la gaine est comprise entre $-8,5.10^{-3}$ et $-4,5.10^{-3}$, et **en ce que** le rayon extérieur ($r_2$) de cette tranchée est compris entre 3,4 et 6,1 $\mu$m.

**21.** Le système de l'une des revendications 1 à 20, **caractérisée en ce que**, à condition que $280 \leq a \leq 360$ nm, la différence ($\Delta n_3$) entre l'indice de l'anneau et l'indice de la gaine est comprise entre $1.10^{-3}$ et $15.10^{-3}$ et **en ce que** le rayon extérieur ($r_3$) de cet anneau est compris entre 5,9 et 8 $\mu$m.

**22.** Le système de l'une des revendications 1 à 21, **caractérisée en ce que**, à condition que $280 \leq a \leq 360$ nm, le double de l'intégrale du produit du rayon par l'indice entre un rayon nul et le rayon ($r_1$) extérieur de la partie centrale de la fibre présentant un indice supérieur à celui de la gaine est compris entre $48.10^{-3}$ et $65.10^{-3}$ $\mu m^2$.

**23.** Le système de l'une des revendications 1 à 22, **caractérisée en ce que**, à condition que $280 \leq a \leq 360$ nm, le triple de l'intégrale du produit du carré du rayon par l'indice entre un rayon nul et le rayon ($r_1$) extérieur de la partie centrale de la fibre présentant un indice supérieur à celui de la gaine est inférieur à $110.10^{-3}$ $\mu m^3$.

**24.** Le système de l'une des revendications 1 à 23, **caractérisée en ce que**, à condition que $280 \leq a \leq 360$ nm, le double de l'intégrale du produit du rayon par l'indice entre le rayon ($r_1$) extérieur de la partie centrale de la fibre présentant un indice supérieur à celui de la gaine et le rayon intérieur ($r_2$) de l'anneau est compris entre $-155.10^{-3}$ et $-75.10^{-3}$ $\mu m^2$.

**25.** Le système de l'une des revendications 1 à 24, **caractérisée en ce que**, à condition que $280 \leq a \leq 360$ nm, le double de l'intégrale du produit du rayon par l'indice entre le rayon intérieur ($r_2$) et le rayon extérieur ($r_3$) de l'anneau est compris entre $70.10^{-3}$ et $210.10^{-3}$ $\mu m^2$.

**26.** Le système de l'une des revendications 1 à 25, **caractérisée en ce que**, à condition que $280 \leq a \leq 360$ nm, le double de l'intégrale du produit du rayon par l'indice entre un rayon nul et le rayon extérieur ($r_3$) de l'anneau est supérieur à $20.10^{-3}$ $\mu m^2$.

**27.** Le système de l'une des revendications 1 à 18, caractérisée en ce, à condition que $120 \leq a \leq 200$ nm, que la différence ($\Delta n_1$) entre l'indice du rectangle ou du trapèze et l'indice de la gaine est comprise entre $18.10^{-3}$ et $30.10^{-3}$, et en ce que le rayon (r1) de la partie de la fibre présentant un indice supérieur à celui de la gaine est compris entre 1,2 et 1,9 $\mu$m.

**28.** Le système de l'une des revendications 1 à 18 et 27, **caractérisée en ce que**, à condition que $120 \leq a \leq 200$ nm, la différence ($\Delta n_2$) entre l'indice de la tranchée déprimée et l'indice de la gaine est comprise entre $-10.10^{-3}$ et $-5,8.10^{-3}$, et **en ce que** le rayon extérieur ($r_2$) de cette tranchée est compris entre 3,4 et 6,1 $\mu$m.

**29.** Le système de l'une des revendications 1 à 18 et 27 à 28, **caractérisée en ce que**, à condition que $120 \leq a \leq 200$ nm, la différence ($\Delta n_3$) entre l'indice de l'anneau et l'indice de la gaine est comprise entre $1.10^{-3}$ et $17,5.10^{-3}$ et **en ce que** le rayon extérieur ($r_3$) de cet anneau est compris entre 6,25 et 8,3 $\mu$m.

**30.** Le système de l'une des revendications 1 à 18 et 27 à 29, **caractérisée en ce que**, à condition que $120 \leq a \leq 200$ nm, le double de l'intégrale du produit du rayon par l'indice entre un rayon nul et le rayon ($r_1$) extérieur de la partie centrale de la fibre présentant un indice supérieur à celui de la gaine est compris entre $50.10^{-3}$ et $60.10^{-3}$ $\mu m^2$.

**31.** Le système de l'une des revendications 1 à 18 et 27 à 30, **caractérisée en ce que**, à condition que $120 \leq a \leq 200$ nm, le triple de l'intégrale du produit du carré du rayon par l'indice entre un rayon nul et le rayon ($r_1$) extérieur de la partie centrale de la fibre présentant un indice supérieur à celui de la gaine est inférieur à $110.10^{-3}$ $\mu m^3$.

**32.** Le système de l'une des revendications 1 à 18 et 27 à 31, **caractérisée en ce que**, à condition que $120 \leq a \leq 200$ nm, le double de l'intégrale du produit du rayon par l'indice entre le rayon ($r_1$) extérieur de la partie centrale de la fibre présentant un indice supérieur à celui de la gaine et le rayon intérieur ($r_2$) de l'anneau est compris entre $-230.10^{-3}$ et $-145.10^{-3}$ $\mu m^2$.

**33.** Le système de l'une des revendications 1 à 18 et 27 à 32, **caractérisée en ce que**, à condition que $120 \leq a \leq 200$

nm, le double de l'intégrale du produit du rayon par l'indice entre le rayon intérieur ($r_2$) et le rayon extérieur ($r_3$) de l'anneau est compris entre $180.10^{-3}$ et $260.10^{-3}$ $\mu m^2$.

**34.** Le système de l'une des revendications 1 à 18 et 27 à 33, **caractérisée en ce que**, à condition que $120 \leq a \leq 200$ nm, le double de l'intégrale du produit du rayon par l'indice entre un rayon nul et le rayon extérieur ($r_3$) de l'anneau, est compris entre $20.10^{-3}$ $\mu m^2$. et $145.10^{-3}$ $\mu m^2$.

**Patentansprüche**

**1.** Lichtleitfaser-Übertragungssystem mit einem Leitungsfaserabschnitt ($6_i$) und einem Kompensationsfaserabschnitt ($12_i$), der die chromatische Dispersion in dem Leitungsfaserabschnitt kompensiert, bei dem die chromatische Dispersion C der Dispersionskompensationsfaser und die Steigung C' der chromatischen Dispersion dieser Faser für eine Wellenlänge aus dem bei dem Übertragungssystem verwendeten Wellenlängenbereich Folgendes erfüllen:

$$\frac{C_g}{C'_g} \times \frac{1}{1+C_{cum}/(L_g.C'_g.\Delta\lambda)} \leq \frac{C}{C'} \leq \frac{C_g}{C'_g} \times \frac{1}{1-C_{cum}/(L_g.C'_g.\Delta\lambda)} \tag{1}$$

wobei $C_g$ die chromatische Dispersion der Leitungsfaser darstellt, $C'_g$ die Ableitung in Bezug auf die Wellenlänge der chromatischen Dispersion der Leitungsfaser, $C_{cum}$ die obere Grenze des Moduls der im Leitungsfaserabschnitt zulässigen kumulierten chromatischen Dispersion und $\Delta\lambda$ die halbe Breite des im Übertragungssystem verwendeten Wellenlängenbereichs, und bei dem die Steigung der chromatischen Dispersion C' und die erste Ableitung dieser Steigung C" in Bezug auf die Wellenlänge der Dispersionskompensationsfaser für eine im Wesentlichen mittlere Wellenlänge aus dem im Übertragungssystem verwendeten Wellenlängenbereich Folgendes erfüllen:

$$\left|\frac{C}{C''}\right| \geq Max\left(\frac{\Delta\lambda}{2} \times \left(\frac{C.C'_g}{C'.C_g} \times \left(1 \pm \frac{C_{cum}}{L_g.C_g.\Delta\lambda}\right) - 1\right)^{-1}\right) \tag{2}$$

wobei die Dispersionskompensationsfaser eine chromatische Dispersion C hat, die bei 1550 nm weniger als -40 ps/(nm·km), sogar weniger als -45 ps/(nm·km) beträgt, wobei eine Steigung C' der chromatischen Dispersion und eine erste Ableitung C" der Steigung der chromatischen Dispersion für eine Wellenlänge nahe 1570 nm in Bezug auf die Wellenlänge Folgendes erfüllen:

$$a \times \frac{1}{1+b} \leq \frac{C}{C'} \leq \alpha \times \frac{1}{1-b}$$

und

$$\left|\frac{C'}{C''}\right| \geq Max\left(c \times \left(\frac{C}{C'}\frac{1}{a} \times (1 \pm b) - 1\right)^{-1}\right)$$

wobei a, b und c Parameter sind, die Folgendes erfüllen:

$280 \leq a \leq 360$ nm oder $120 \leq a \leq 200$ nm
$0,2 \leq b \leq 0,25$ und
$c \leq 25$ nm.

**2.** System nach Anspruch 1, bei dem die Anforderungen (1) und (2) für eine im Wesentlichen mittlere Wellenlänge aus dem im Übertragungssystem verwendeten Wellenlängenbereich erfüllt werden.

**3.** System nach Anspruch 1 oder 2, **dadurch gekennzeichnet, dass** sich die Differenz zwischen der im Wesentlichen mittleren Wellenlänge und der mittleren Wellenlänge aus dem im Übertragungssystem verwendeten Wellenlängenbereich um weniger als 10 % von dem im Übertragungssystem verwendeten Wellenlängenbereich unterscheidet.

4. System nach einem der Ansprüche 1 bis 3, **dadurch gekennzeichnet, dass** die Dispersionskompensationsfaser im gesamten im Übertragungssystem verwendeten Wellenlängenbereich für eine Wicklung um eine Hülse mit einem Radius von 10 mm Biegeverluste hat, die kleiner oder gleich 400 dB/m, sogar kleiner oder gleich 100 dB/m sind.

5. System nach einem der Ansprüche 1 bis 4, **dadurch gekennzeichnet, dass** die Dispersionskompensationsfaser im gesamten im Übertragungssystem verwendeten Wellenlängenbereich für eine Wicklung mit 100 Windungen auf einer Hülse mit einem Radius von 30 mm Biegeverluste hat, die kleiner oder gleich 0,05 dB, sogar kleiner oder gleich $10^{-3}$ dB sind.

6. System nach einem der Ansprüche 1 bis 5, **dadurch gekennzeichnet, dass** die Dispersionskompensationsfaser einen Wirkquerschnitt hat, der bei 1550 nm größer oder gleich 12 $\mu m^2$ ist.

7. System nach einem der Ansprüche 1 bis 6, **dadurch gekennzeichnet, dass** die Dispersionskompensationsfaser eine Polarisationsmodendispersion hat, die bei 1550 nm kleiner oder gleich 0,5 ps/km$^{1/2}$ ist.

8. System nach einem der Ansprüche 1 bis 7, **dadurch gekennzeichnet, dass** die Dispersionskompensationsfaser bei 1550 nm eine Dämpfung von weniger als 1 dB/km, sogar von weniger als 0,8 dB/km hat.

9. System nach einem der Ansprüche 1 bis 8, **dadurch gekennzeichnet, dass** das Verhältnis zwischen der oberen Grenze des Moduls der kumulierten chromatischen Dispersion $C_{cum}$ und der Länge Lg eines Leitungsfaserabschnitts weniger als 0,5 ps/(nm·km), sogar weniger als 0,1 ps/(nm·km) beträgt.

10. System nach einem der Ansprüche 1 bis 9, **dadurch gekennzeichnet, dass** es sich bei der Leitungsfaser um eine Stufenindexfaser handelt.

11. System nach einem der Ansprüche 1 bis 9, **dadurch gekennzeichnet, dass** es sich bei der Leitungsfaser um eine Faser mit versetzter Dispersion und mit positiver chromatischer Dispersion handelt.

12. System nach einem der Ansprüche 1 bis 11, **dadurch gekennzeichnet dass** die Dispersionskompensationsfaser ein rechteckiges Indexprofil mit einem tiefliegenden Graben und einem Ring aufweist.

13. System nach einem der Ansprüche 1 bis 11, **dadurch gekennzeichnet, dass** die Dispersionskompensationsfaser ein trapezförmiges Indexprofil mit einem tiefliegenden Graben und einem Ring aufweist.

14. System nach einem der Ansprüche 1 bis 13, **dadurch gekennzeichnet, dass** die Dispersionskompensationsfaser für die Wellenlängen zwischen 1530 und 1620 nm und für eine Wicklung um eine Hülse mit einem Radius von 10 mm Biegeverluste hat, die kleiner oder gleich 400 dB/m, sogar kleiner oder gleich 100 dB/m sind.

15. System nach einem der Ansprüche 1 bis 14, **dadurch gekennzeichnet, dass** die Dispersionskompensationsfaser für die Wellenlängen zwischen 1530 und 1620 nm und für eine Wicklung mit 100 Windungen auf einer Hülse mit einem Radius von 30 mm Biegeverluste hat, die kleiner oder gleich 0,05 dB, sogar kleiner oder gleich $10^{-3}$ dB sind.

16. System nach einem der Ansprüche 1 bis 15, **dadurch gekennzeichnet, dass** die Dispersionskompensationsfaser einen Wirkquerschnitt hat, der bei 1550 nm größer oder gleich 12 $\mu m^2$ ist.

17. System nach einem der Ansprüche 1 bis 16, **dadurch gekennzeichnet, dass** es eine Polarisationsmodendispersion hat, die bei 1550 nm kleiner oder gleich 0,5 ps/km$^{1/2}$ ist.

18. System nach einem der Ansprüche 1 bis 17, **dadurch gekennzeichnet, dass** es bei 1550 nm eine Dämpfung von weniger als 1 dB/km, sogar von weniger als 0,8 dB/km hat.

19. System nach einem der Ansprüche 1 bis 18, **dadurch gekennzeichnet, dass** unter der Bedingung, dass $280 \leq a \leq 360$ nm gilt, die Differenz ($\Delta n_1$) zwischen dem Index des Rechtecks oder des Trapez und dem Index des Mantels zwischen $18 \cdot 10^{-3}$ und $30 \cdot 10^{-3}$ beträgt und der Radius ($r_1$) des Faserteils, dessen Index größer ist als der des Mantels, zwischen 1,2 und 2,1 $\mu m$ beträgt.

**20.** System nach einem der Ansprüche 1 bis 19, **dadurch gekennzeichnet, dass** unter der Bedingung, dass $280 \leq a \leq 360$ nm gilt, die Differenz ($\Delta n_2$) zwischen dem Index des abgesenkten Grabens und dem Index des Mantels zwischen $-8{,}5 \cdot 10^{-3}$ und $-4{,}5 \cdot 10^{-3}$ beträgt und der Außenradius ($r_2$) dieses Grabens zwischen 3,4 und 6,1 $\mu$m beträgt.

**21.** System nach einem der Ansprüche 1 bis 20, **dadurch gekennzeichnet, dass** unter der Bedingung, dass $280 \leq a \leq 360$ nm gilt, die Differenz ($\Delta n_3$) zwischen dem Index des Rings und dem Index des Mantels zwischen $1 \cdot 10^{-3}$ und $15 \cdot 10^{-3}$ beträgt und der Außenradius ($r_3$) dieses Rings zwischen 5,9 und 8 $\mu$m beträgt.

**22.** System nach einem der Ansprüche 1 bis 21, **dadurch gekennzeichnet, dass** unter der Bedingung, dass $280 \leq a \leq 360$ nm gilt, das Doppelte des Integrals des Produkts des Radius mit dem Index zwischen einem Radius von Null und dem Außenradius ($r_1$) des mittleren Faserteils, dessen Index größer ist als der des Mantels, zwischen $48 \cdot 10^{-3}$ und $65 \cdot 10^{-3}$ $\mu$m$^2$ beträgt.

**23.** System nach einem der Ansprüche 1 bis 22, **dadurch gekennzeichnet, dass** unter der Bedingung, dass $280 \leq a \leq 360$ nm gilt, das Dreifache des Integrals des Produkts des Quadrats des Radius mit dem Index zwischen einem Radius von Null und dem Außenradius ($r_1$) des mittleren Faserteils, dessen Index größer ist als der des Mantels, weniger als $110.10^{-3}$ $\mu$m$^3$ beträgt.

**24.** System nach einem der Ansprüche 1 bis 23, **dadurch gekennzeichnet, dass** unter der Bedingung, dass $280 \leq a \leq 360$ nm gilt, das Doppelte des Integrals des Produkts des Radius mit dem Index zwischen dem Außenradius ($r_1$) des mittleren Faserteils, dessen Index größer ist als der des Mantels, und dem Innenradius ($r_2$) des Rings zwischen $-155 \cdot 10^{-3}$ und $-75 \cdot 10^{-3}$ $\mu$m$^2$ beträgt.

**25.** System nach einem der Ansprüche 1 bis 24, **dadurch gekennzeichnet, dass** unter der Bedingung, dass $280 \leq a \leq 360$ nm gilt, das Doppelte des Integrals des Produkts des Radius mit dem Index zwischen dem Innenradius ($r_2$) und dem Außenradius ($r_3$) des Rings zwischen $70 \cdot 10^{-3}$ und $210 \cdot 10^{-3}$ $\mu$m$^2$ beträgt.

**26.** System nach einem der Ansprüche 1 bis 25, **dadurch gekennzeichnet, dass** unter der Bedingung, dass $280 \leq a \leq 360$ nm gilt, das Doppelte des Integrals des Produkts des Radius mit dem Index zwischen einem Radius von Null und dem Außenradius ($r_3$) des Rings mehr als $20 \cdot 10^{-3}$ $\mu$m$^2$ beträgt.

**27.** System nach einem der Ansprüche 1 bis 18, **dadurch gekennzeichnet, dass** unter der Bedingung, dass $120 \leq a \leq 200$ nm gilt, die Differenz ($\Delta n_1$) zwischen dem Index des Rechtecks oder des Trapez und dem Index des Mantels zwischen $18 \cdot 10^{-3}$ und $30.10^{-3}$ beträgt und der Radius ($r_1$) des Faserteils, dessen Index größer ist als der des Mantels, zwischen 1,2 und 1,9 $\mu$m beträgt.

**28.** System nach einem der Ansprüche 1 bis 18 und 27, **dadurch gekennzeichnet, dass** unter der Bedingung, dass $120 \leq a \leq 200$ nm gilt, die Differenz ($\Delta n_2$) zwischen dem Index des abgesenkten Grabens und dem Index des Mantels zwischen $-10 \cdot 10^{-3}$ und $-5{,}8 \cdot 10^{-3}$ beträgt und der Außenradius ($r_2$) dieses Grabens zwischen 3,4 und 6,1 $\mu$m beträgt.

**29.** System nach einem der Ansprüche 1 bis 18 und 27 bis 28, **dadurch gekennzeichnet, dass** unter der Bedingung, dass $120 \leq a \leq 200$ nm gilt, die Differenz ($\Delta n_3$) zwischen dem Index des Rings und dem Index des Mantels zwischen $1.10^{-3}$ und $17{,}5 \cdot 10^{-3}$ beträgt und der Außenradius ($r_3$) dieses Rings zwischen 6,25 und 8,3 $\mu$m beträgt.

**30.** System nach einem der Ansprüche 1 bis 18 und 27 bis 29, **dadurch gekennzeichnet, dass** unter der Bedingung, dass $120 \leq a \leq 200$ nm gilt, das Doppelte des Integrals des Produkts des Radius mit dem Index zwischen einem Radius von Null und dem Außenradius ($r_1$) des mittleren Faserteils, dessen Index größer ist als der des Mantels, zwischen $50 \cdot 10^{-3}$ und $60 \cdot 10^{-3}$ $\mu$m$^2$ beträgt.

**31.** System nach einem der Ansprüche 1 bis 18 und 27 bis 30, **dadurch gekennzeichnet, dass** unter der Bedingung, dass $120 \leq a \leq 200$ nm gilt, das Dreifache des Integrals des Produkts des Quadrats des Radius mit dem Index zwischen einem Radius von Null und dem Außenradius ($r_1$) des mittleren Faserteils, dessen Index größer ist als der des Mantels, weniger als $110 \cdot 10^{-3}$ $\mu$m$^3$ beträgt.

**32.** System nach einem der Ansprüche 1 bis 18 und 27 bis 31, **dadurch gekennzeichnet, dass** unter der Bedingung, dass $120 \leq a \leq 200$ nm gilt, das Doppelte des Integrals des Produkts des Radius mit dem Index zwischen dem Außenradius ($r_1$) des mittleren Faserteils, dessen Index größer ist als der des Mantels, und dem Innenradius ($r_2$) des Rings zwischen $-230 \cdot 10^{-3}$ und $-145 \cdot 10^{-3}$ $\mu$m$^2$ beträgt.

**33.** System nach einem der Ansprüche 1 bis 18 und 27 bis 32, **dadurch gekennzeichnet, dass** unter der Bedingung, dass $120 \leq a \leq 200$ nm gilt, das Doppelte des Integrals des Produkts des Radius mit dem Index zwischen dem Innenradius ($r_2$) und dem Außenradius ($r_3$) des Rings zwischen $180 \cdot 10^{-3}$ und $260 \cdot 10^{-3}$ $\mu m^2$ beträgt.

**34.** System nach einem der Ansprüche 1 bis 18 und 27 bis 33, **dadurch gekennzeichnet, dass** unter der Bedingung, dass $120 \leq a \leq 200$ nm gilt, das Doppelte des Integrals des Produkts des Radius mit dem Index zwischen einem Radius von Null und dem Außenradius ($r_3$) des Rings zwischen $20 \cdot 10^{-3}$ $\mu m^2$ und $145 \cdot 10^{-3}$ $\mu m^2$ beträgt.

## Claims

**1.** An optical fibre transmission system having a line fibre section ($6_i$) and a compensation fibre section ($12_i$) that compensates the chromatic dispersion in the line fibre section, wherein the chromatic dispersion C of the dispersion compensation fibre and the chromatic dispersion slope C' of this fibre satisfy, for a wavelength from the wavelength range used in the transmission system:

$$\frac{C_g}{C'_g} \times \frac{1}{1 + C_{cum}/(L_g.C'_g.\Delta\lambda)} \leq \frac{C}{C'} \leq \frac{C_g}{C'_g} \times \frac{1}{1 - C_{cum}/(L_g.C'_g.\Delta\lambda)} \qquad (1)$$

where $C_g$ is the chromatic dispersion of the line fibre, $C'_g$ is the derivative with respect to wavelength of the chromatic dispersion of the line fibre, $C_{cum}$ is the upper bound of the modulus of the cumulative chromatic dispersion permitted in the line fibre section and $\Delta\lambda$ is the half-width of the wavelength range used in the transmission system, and wherein the chromatic dispersion slope C' and the first derivative C" of this slope with respect to wavelength of the dispersion compensation fibre satisfy, for a substantially median wavelength of the wavelength range used in the transmission system:

$$\left|\frac{C}{C''}\right| \geq Max\left(\frac{\Delta\lambda}{2} \times \left(\frac{C.C'_g}{C'.C_g} \times \left(1 \pm \frac{C_{cum}}{L_g.C_g.\Delta\lambda}\right) - 1\right)^{-1}\right) \qquad (2)$$

the dispersion compensation fibre having a chromatic dispersion C less than -40 ps/(nm.km) or even less than -45 ps/(nm.km) at 1550 nm, a chromatic dispersion slope C' and a first derivative C" of the chromatic dispersion slope with respect to wavelength satisfying:

$$a \times \frac{1}{1+b} \leq \frac{C}{C'} \leq \alpha \times \frac{1}{1-b}$$

and

$$\left|\frac{C'}{C''}\right| \geq Max\left(c \times \left(\frac{C}{C'}\frac{1}{a} \times (1 \pm b) - 1\right)^{-1}\right)$$

for a wavelength close to 1570 nm, where a, b and c are parameters satisfying:

$280 \leq a \leq 360$ nm or $120 \leq a \leq 200$ nm,
$0.2 \leq b \leq 0.25$, and
$C \leq 25$ nm.

**2.** The system according to claim 1, wherein the constraints (1) and (2) are satisfied for a substantially median wavelength of the wavelength range used in the transmission system.

3. The system according to claim 1 or 2, **characterized in that** the difference between said substantially median wavelength and the median wavelength of the wavelength range used in the transmission system is less 10% of the wavelength range used in the transmission system.

4. The system according to any one of claims 1 to 3, **characterized in that** the dispersion compensation fibre has bending losses less than or equal to 400 dB/m or even less than or equal to 100 dB/m when wound around a sleeve of 10 mm radius throughout the wavelength range used in the transmission system.

5. The system according to any one of claims 1 to 4, **characterized in that** the dispersion compensation fibre has bending losses less than or equal to 0·05 dB or even less than or equal to $10^{-3}$ dB when 100 turns are wound on a sleeve of 30 mm radius throughout the wavelength range used in the transmission system.

6. The system according to any one of claims 1 to 5, **characterized in that** the dispersion compensation fibre has an effective area greater than or equal to 12 $\mu$m$^2$ at 1550 nm.

7. The system according to any one of claims 1 to 6, **characterized in that** the dispersion compensation fibre has a polarization mode dispersion less than or equal to 0·5 ps/km$^{1/2}$ at 1550 nm.

8. The system according to any one of claims 1 to 7, **characterized in that** the dispersion compensation fibre has an attenuation less than 1 dB/km or even less than 0·8 dB/km at 1550 nm.

9. The system according to any one of claims 1 to 8, **characterized in that** the ratio between the upper bound $C_{cum}$ of the modulus of the cumulative chromatic dispersion and the length Lg of a line fibre section is less than 0·5 ps/(nm.km) or even less than 0·1 ps/(nm.km).

10. The system according to any one of claims 1 to 9, **characterized in that** the line fibre is a step index fibre.

11. The system according to any one of claims 1 to 9, **characterized in that** the line fibre is a dispersion shifted fibre with positive chromatic dispersion.

12. The system according to any one of claims 1 to 11, **characterized in that** the dispersion compensation fibre has a rectangle with buried trench and ring index profile.

13. The system according to any one of claims 1 to 11, **characterized in that** the dispersion compensation fibre has a trapezoidal index profile with buried trench and ring.

14. The system according to any one of claims 1 to 13, **characterized in that** the dispersion compensation fibre has bending losses less than or equal to 400 dB/m or even less than or equal to 100 dB/m when wound around a sleeve of 10 mm radius for wavelengths between 1530 and 1620 nm.

15. The system according to any one of claims 1 to 14, **characterized in that** the dispersion compensation fibre has bending losses less than or equal to 0·05 dB or even less than or equal to $10^{-3}$ dB when 100 turns are wound on a sleeve of 30 mm radius for wavelengths between 1530 and 1620 nm.

16. The system according to any one of claims 1 to 15, **characterized in that** the dispersion compensation fibre has an effective area greater than or equal to 12 $\mu$m$^2$ at 1550 nm.

17. The system according to any one of claims 1 to 16, **characterized in that** it has a polarization mode dispersion less than or equal to 0·5 ps/km$^{1/2}$ at 1550 nm.

18. The system according to any one of claims 1 to 17, **characterized in that** it has an attenuation less than 1 dB/km or even less than 0·8 dB/km at 1550 nm.

19. The system according to any one of claims 1 to 18, **characterized in that** provided that $280 \leq a \leq 360$ mm the difference ($\Delta n_1$) between the index of the rectangle or the trapezium and the index of the cladding is between $18.10^{-3}$ and $30.10^{-3}$ and **in that** the radius ($r_1$) of the portion of the fibre having an index greater than that of the cladding is between 1·2 and 2·1 $\mu$m.

**20.** The system according to any one of claims 1 to 19, **characterized in that** provided that $280 \leq a \leq 360$ mm the difference ($\Delta n_2$) between the index of the depleted trench and the index of the cladding is between $-8 \cdot 5.10^{-3}$ and $-4 \cdot 5.10^{-3}$ and **in that** the outer radius ($r_2$) of this trench is between $3 \cdot 4$ and $6 \cdot 1$ $\mu$m.

**21.** The system according to any one of claims 1 to 20, **characterized in that** provided that $280 \leq a \leq 360$ mm the difference ($\Delta n_3$) between the index of the ring and the index of the cladding is between $1.10^{-3}$ and $15.10^{-3}$ and **in that** the outer radius ($r_3$) of this ring is between $5 \cdot 9$ and $8$ $\mu$m.

**22.** The system according to any one of claims 1 to 21, **characterized in that** provided that $280 \leq a \leq 360$ mm twice the integral of the product of the radius and the index between a zero radius and the outer radius ($r_1$) of the central portion of the fibre having an index greater than that of the cladding is between $48.10^{-3}$ and $65.10^{-3}$ $\mu$m$^2$.

**23.** The system according to any one of claims 1 to 22, **characterized in that** provided that $280 \leq a \leq 360$ mm three times the integral of the product of the square of the radius by the index between a zero radius and the outer radius ($r_1$) of the central portion of the fibre having an index greater than that of the cladding is less than $110.10^{-3}$ $\mu$m$^3$.

**24.** The system according to any one of claims 1 to 23, **characterized in that** provided that $280 \leq a < 360$ mm twice the integral of the product of the radius and the index between the outer radius ($r_1$) of the central portion of the fibre having an index greater than that of the cladding and the inner radius ($r_2$) of the ring is between $-155.10^{-3}$ and $-75.10^{-3}$ $\mu$m$^2$.

**25.** The system according to any one of claims 1 to 24, **characterized in that** provided that $280 \leq a \leq 360$ mm twice the integral of the product of the radius and the index between the inner radius ($r_2$) and the outer radius ($r_3$) of the ring is between $70.10^{-3}$ and $210.10^{-3}$ $\mu$m$^2$.

**26.** The system according to any one of claims 1 to 25, **characterized in that** provided that $280 \leq a \leq 360$ mm twice the integral of the product of the radius and the index between a zero radius and an outer radius ($r_3$) of the ring is greater than $20.10^{-3}$ $\mu$m$^2$.

**27.** The system according to any one of claims 1 to 18, **characterized in that** provided that $120 \leq a \leq 200$ mm the difference ($\Delta n_1$) between the index of the rectangle or the trapezium and the index of the cladding is between $18.10^{-3}$ and $30.10^{-3}$ and **in that** the radius ($r_1$) of the portion of the fibre having an index greater than that of the cladding is between $1 \cdot 2$ and $1 \cdot 9$ $\mu$m.

**28.** The system according to any one of claims 1 to 18 and 27, **characterized in that** provided that $120 \leq a < 200$ mm the difference ($\Delta n_2$) between the index of the depleted trench and the index of the cladding is between $-10.10^{-3}$ and $-5 \cdot 8.10^{-3}$ and **in that** the outer radius ($r_2$) of this trench is between $3 \cdot 4$ and $6 \cdot 1$ $\mu$m.

**29.** The system according to any one of claims 1 to 18 and 27 or 28, **characterized in that** provided that $120 < a < 200$ mm the difference ($\Delta n_3$) between the index of the ring and the index of the cladding is between $1.10^{-3}$ and $17 \cdot 5.10^{-3}$ and **in that** the outer radius ($r_3$) of this ring is between $6 \cdot 25$ and $8 \cdot 3$ $\mu$m.

**30.** The system according to any one of claims 1 to 18 and 27 to 29, **characterized in that** provided that $120 < a < 200$ mm twice the integral of the product of the radius and the index between a zero radius and the outer radius ($r_1$) of the central portion of the fibre having an index greater than that of the cladding is between $50.10^{-3}$ and $60.10^{-3}$ $\mu$m$^2$.

**31.** The system according to any one of claims 1 to 18 and 27 to 30, **characterized in that** provided that $120 \leq a \leq 200$ mm three times the integral of the product of the square of the radius and the index between a zero radius and the outer radius ($r_1$) of the central portion of the fibre having an index greater than that of the cladding is less than $110.10^{-3}$ $\mu$m$^3$.

**32.** The system according to any one of claims 1 to 18 and 27 to 31, **characterized in that** provided that $120 \leq a \leq 200$ mm twice the integral of the product of the radius and the index between the outer radius ($r_1$) of the central portion of the fibre having an index greater than that of the cladding and the inner radius ($r_2$) of the ring is between $-230.10^{-3}$ and $-145.10^{-3}$ $\mu$m$^2$.

**33.** The system according to any one of claims 1 to 18 and 27 to 32, **characterized in that** provided that $120 < a < 200$ mm twice the integral of the product of the radius and the index between the inner radius ($r_2$) and the outer radius

($r_3$) of the ring is between $180.10^{-3}$ and $260.10^{-3}$ $\mu m^2$.

34. The system according to any one of claims 1 to 18 and 27 to 33, **characterized in that** provided that $120 \leq a \leq 200$ mm twice the integral of the product of the radius and the index between a zero radius and the outer radius ($r_3$) of the ring is between $20.10^{-3}$ and $145.10^{-3}$ $\mu m^2$.

## FIG_1

## FIG_2

## FIG_3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 790107 A2
- FR 0002316
- US 5568583 A
- US 5361319 A
- WO 9913366 A
- WO 9902028 A